(19) Europäisches Patentamt
European Patent Office
Office européen des brevets

(11) EP 4 480 932 A1

(12) # EUROPEAN PATENT APPLICATION

(43) Date of publication:
**25.12.2024 Bulletin 2024/52**

(21) Application number: **24178917.1**

(22) Date of filing: **29.05.2024**

(51) International Patent Classification (IPC):
***C04B 20/10*** *(2006.01)* ***C04B 28/02*** *(2006.01)*
***C04B 40/00*** *(2006.01)* *C04B 103/44* *(2006.01)*

(52) Cooperative Patent Classification (CPC):
(C-Sets available)
**C04B 20/1037; C04B 28/02; C04B 40/0042;**
C04B 2103/44 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.06.2023 JP 2023092811**

(71) Applicant: **Shin-Etsu Chemical Co., Ltd.**
**Tokyo (JP)**

(72) Inventor: **SAITO, Hironao**
**Joetsu-shi (JP)**

(74) Representative: **Mewburn Ellis LLP**
**Aurora Building**
**Counterslip**
**Bristol BS1 6BX (GB)**

(54) **HYDRAULIC COMPOSITION, POWDERY ADDITIVE, POWDERY THICKENER, AND PREPARATION METHOD**

(57) A powdery additive comprising a water-soluble porous powder impregnated with a specific polyethylene glycol derivative is provided. The powdery additive is easy to handle and effective for formulating a hydraulic composition which is improved in fluidity, bleeding reduction and frost damage resistance.

EP 4 480 932 A1

(52) Cooperative Patent Classification (CPC): (Cont.)

C-Sets
**C04B 20/1037, C04B 24/38;**
**C04B 20/1037, C04B 2103/0053;**
**C04B 28/02, C04B 20/1037, C04B 24/383,**
**C04B 2103/65;**
**C04B 40/0042, C04B 20/1037, C04B 24/383,**
**C04B 2103/65**

## Description

### TECHNICAL FIELD

This invention relates to a hydraulic composition, powdery additive, powdery thickener, and method of preparing a hydraulic composition.

### BACKGROUND

Water-soluble cellulose ethers as typified by hydroxyalkyl alkyl celluloses are widely used as the thickener for reducing bleeding without loss of fluidity. The water-soluble cellulose ethers, however, have an air entraining ability, with the risk that the air content of a hydraulic composition or concrete is increased beyond the standard ($4.5 \pm 1.5\%$) to reduce the compressive strength of concrete. One approach for avoiding the risk is to add a defoamer to remove air bubbles to reduce the air content.

A variety of compounds are known as the defoamer. For example, Patent Document 1 discloses a surfactant in the form of a polyether compound as a nonionic defoamer.

### Citation List

| | |
|---|---|
| Patent Document 1: | JP-A 2008-037663 |
| Patent Document 2: | JP-A 2011-184236 |
| Patent Document 3: | JP-A 2017-065995 |
| Patent Document 4: | JP-A H05-085791 |
| Non-Patent Document 1: | "Approach to emulsion formulation design p.2-9", Nihon Emulsion Co., Ltd., "What is an emulsion formulation design with organic conception diagram?" (as of Jan 10, 2023), internet <https://www.nihonemulsion.co.jp/en/tech/organic.html> |
| Non-Patent Document 2: | Concrete structure durability series: frost damage, T. Hasegawa and T. Fujiwara, Gihoudo Publishing, pp.63, Feb. 1988 |

### DISCLOSURE OF INVENTION

Since the polyether compounds are liquid or waxy solid, they must be dissolved in AE water-reducing agents or the like prior to use, giving rise to the problem of cumbersome handling. The problem can be overcome by converting the polyether compound to powder form by impregnating a highly oil-absorptive inorganic powder such as silica with the polyether compound (see Patent Documents 1 and 2). The measurement of an air void spacing factor (described in Patent Document 3) on the cement compositions and hydraulic compositions (described in Patent Documents 1 and 2) reveals that the defoamer with which an inorganic powder is impregnated tends to selectively remove the entrained air in the form of very small bubbles with a diameter of 50 to 500 $\mu$m, which are regarded useful for preventing frost damage, as compared with a neat defoamer (defoamer alone). The defoamer with which an inorganic powder is impregnated (as proposed in Patent Documents 1 and 2) can sometimes aggravate frost damage resistance. There remains room for improvement.

As the hydraulic composition which has satisfactory frost damage resistance despite the use of water-soluble cellulose ethers, for example, Patent Document 4 discloses a concrete composition comprising a cement binder, aggregates, water, water-reducing agent, and AE agent, to which an alkali metal salt of a sulfoethylcellulose and a nonionic water-soluble cellulose ether are added in an amount of 0.02 to 0.5% by weight of the cement binder. Although the sulfoethylcellulose used in Patent Document 4 does not increase the air entrainment of a hydraulic composition, it gives rise to another problem that fluidity is aggravated. In addition, the sulfoethylcellulose is expensive and thus undesirable from the aspect of economy. There remains room for improvement.

An object of the invention is to provide a powdery additive or powdery thickener for hydraulic compositions which is easy to handle and effective for formulating a hydraulic composition which is improved in fluidity, bleeding reduction and frost damage resistance; a hydraulic composition; and a method of preparing a hydraulic composition.

The inventor has found that when a water-soluble cellulose ether and a polyethylene glycol (PEG) derivative of specific chemical structure are used in combination, the outstanding problems of a hydraulic composition including frost damage, fluidity and bleeding can be overcome. When a powdery additive in the form of a water-soluble porous powder impregnated with a polyethylene glycol (PEG) derivative of specific chemical structure is used, the problem of cumbersome handling of the additive is overcome while maintaining the improvements in frost damage resistance, fluidity and bleeding reduction of the hydraulic composition.

In one aspect, the invention provides a powdery additive for hydraulic compositions comprising a water-soluble porous powder impregnated with a polyethylene glycol derivative having an IOB value in the organic conception diagram of 0.3 to 1.8 and a weight average molecular weight Mw of 300 to 2,500 as measured by gel permeation chromatography versus polystyrene standards, and containing at least one $RCOO(C_2H_4O)_n$- wherein R is a $C_{10}$-$C_{24}$ straight or branched monovalent hydrocarbon group and n is an integer of 3 to 40 in the molecule and a polyethylene glycol end OH or -OH group as a functional group.

In a preferred embodiment, the polyethylene glycol derivative is at least one of compounds having the general formulae (A1) and (A2).

$$RCOO\text{-}(C_2H_4O)_n\text{-}H \qquad (A1)$$

$$(RCOO\text{-}(C_2H_4O)_{n1})_tR^1((OC_2H_4)_{n2}\text{-}OH)_u \qquad (A2)$$

Herein Rand n are as defined above, $R^1$ is a residue obtained from a polyhydric alcohol having 2 to 5 hydroxy groups by eliminating the hydroxy groups, the residue being a di- to penta-valent $C_2$-$C_5$ straight or branched hydrocarbon group, t and u each are an integer of 1 to 4, the sum of t and u is an integer of 2 to 5, n1 and n2 each are an integer of at least 0, and $n1\times t+n2\times u$ is an integer of 3 to 30.

In a preferred embodiment, the water-soluble porous powder is a water-soluble porous polysaccharide.

In a preferred embodiment, the water-soluble porous powder has a bulk density of 0.10 to 0.25 g/$cm^3$.

In an integral molecular weight distribution of the water-soluble porous powder as measured by gel permeation chromatography, an accumulated value of the concentration fraction at a molecular weight of 10,000 is preferably 30 to 90%.

In a preferred embodiment, the water-soluble porous powder has a dextrose equivalent (DE) of 2 to 18.

In a particle size distribution of the water-soluble porous powder as measured by the dry laser method, the water-soluble porous powder preferably has an average particle size of 10 to 230 μm and the volume proportion of particles having a particle size of at least 300 μm is 0 to 10%.

In a particle size distribution of the additive as measured by the dry laser method, the additive preferably has an average particle size of 40 to 280 μm and the volume proportion of particles having a particle size of at least 300 μm is 0 to 10%.

In another aspect, the invention provides a powdery thickener for hydraulic compositions comprising the powdery additive defined herein and a water-soluble cellulose ether.

In the thickener, the water-soluble cellulose ether is preferably a hydroxyalkyl alkyl cellulose.

In the thickener, the water-soluble cellulose ether preferably has a 2 wt% aqueous solution viscosity of 15 to 450,000 mPa·s at 20°C.

The thickener may further comprise a water repellent.

In a further aspect, the invention provides a hydraulic composition comprising the powdery additive defined herein, a hydraulic substance, and water.

The hydraulic composition may further comprise a water-soluble cellulose ether and/or a water repellent.

In a preferred embodiment, the hydraulic composition is a concrete composition further comprising a fine aggregate, a coarse aggregate, and a water-reducing agent, the concrete composition having a slump of 8 to 21 cm as measured by the method of JIS A 1101 and a compressive strength of 18 to 45 N/$mm^2$ as measured by the method of JIS A 1108 at an age of 28 days.

In a still further aspect, the invention provides a hydraulic composition comprising the powdery thickener defined herein, a hydraulic substance, and water.

In a preferred embodiment, the hydraulic composition is a concrete composition further comprising a fine aggregate, a coarse aggregate, and a water-reducing agent, the concrete composition having a slump of 8 to 21 cm as measured by the method of JIS A 1101 and a compressive strength of 18 to 45 N/$mm^2$ as measured by the method of JIS A 1108 at an age of 28 days.

In a yet further aspect, the invention provides a method of preparing a hydraulic composition containing a hydraulic substance, water, and a polyethylene glycol derivative, the method comprising the step of adding the powdery additive defined herein in the step of mixing the components of the hydraulic composition.

Preferably, the hydraulic composition further contains a fine aggregate, a coarse aggregate, and a water-reducing agent to constitute a concrete composition, the concrete composition having a slump of 8 to 21 cm as measured by the method of JIS A 1101 and a compressive strength of 18 to 45 $N/mm^2$ as measured by the method of JIS A 1108 at an age of 28 days.

In a yet further aspect, the invention provides a method of preparing a hydraulic composition containing a hydraulic substance, water, a water-soluble cellulose ether, and a polyethylene glycol derivative, the method comprising the step of adding the powdery thickener defined herein in the step of mixing the components of the hydraulic composition.

Preferably, the hydraulic composition further contains a fine aggregate, a coarse aggregate, and a water-reducing agent to constitute a concrete composition, the concrete composition having a slump of 8 to 21 cm as measured by the method of JIS A 1101 and a compressive strength of 18 to 45 $N/mm^2$ as measured by the method of JIS A 1108 at an age of 28 days.

ADVANTAGEOUS EFFECTS

Using the powdery additive and the powdery thickener for hydraulic compositions, a hydraulic composition which is improved in frost damage resistance, fluidity and bleeding reduction can be readily manufactured.

FURTHER EXPLANATIONS; OPTIONS AND PREFERENCES

As used herein, Mw stands for weight average molecular weight, GPC for gel permeation chromatography, DS for "degree of substitution," and MS for "molar substitution." The notation (Cn-Cm) means a group containing from n to m carbon atoms per group.

The inventor first attempted to solve the problem of cumbersome handling of an additive. A defoamer in the form of impregnated inorganic powder acts to selectively remove very small air bubbles with a diameter of less than 200 μm, which are regarded useful for preventing frost damage, because the leaching of the defoamer from the inorganic powder is slow during preparation of a hydraulic composition. As to the defoamer itself, it is necessary to choose a material capable of removing coarse or large bubbles known as "entrapped air" which are regarded disadvantageous for frost damage resistance without removing very small bubbles known as "entrained air" which are regarded useful for frost damage resistance.

Then the inventor presumed that a polyethylene glycol (PEG) derivative of specific structure, when it functions as a defoamer, affects the size of air bubbles which are easy to remove and the ease of defoaming (in view of frost damage resistance). Also, a focus is put on a water-soluble porous powder as an object to be impregnated. While the PEG derivative tends to remove coarse or large bubbles, but not very small bubbles, it is effective for flow enhancement and bleeding reduction. When a water-soluble porous powder is used as the object to be impregnated, the leaching is improved so that coarse or large bubbles may be more selectively removed. That is, the powdery additive in the form of a water-soluble porous powder impregnated with a PEG derivative is successful in advantageously improving the frost damage resistance, fluidity, and bleeding reduction of a hydraulic composition.

<Powdery additive>

One embodiment of the invention is a powdery additive for hydraulic compositions comprising a water-soluble porous powder impregnated with a polyethylene glycol (PEG) derivative. The PEG derivative has an IOB value in the organic conception diagram of 0.3 to 1.8 and a weight average molecular weight Mw of 300 to 2,500 as measured by gel permeation chromatography versus polystyrene standards, and contains at least one $RCOO(C_2H_4O)_n$- wherein R is a $C_{10}$-$C_{24}$ straight or branched monovalent hydrocarbon group and n is an integer of 3 to 40 in the molecule and a polyethylene glycol end OH or -OH group as a functional group.

(Polyethylene glycol derivative)

The PEG derivative should have an IOB value in the organic conception diagram of 0.3 to 1.8 and a Mw of 300 to 2,500 as measured by GPC versus polystyrene standards, and contain at least one $RCOO(C_2H_4O)_n$- wherein R is a $C_{10}$-$C_{24}$ straight or branched monovalent hydrocarbon group and n is an integer of 3 to 40 in the molecule and a polyethylene glycol end OH or -OH group as a functional end group.

[IOB value]

The PEG derivative should have an IOB value in the organic conception diagram of 0.3 to 1.8, preferably 0.7 to 1.2. If the IOB value is less than 0.3, the PEG derivative is less water-soluble. If the IOB value exceeds 1.8, the PEG derivative has a stronger surfactant effect and a poorer defoaming effect, failing to impart frost damage resistance to a

hydraulic composition.

As the hydraulic composition becomes less flowing, more air is entrained during mixing step and a stronger defoaming ability is necessary. In this sense, the fluidity of a hydraulic composition is correlated to the IOB value in the organic conception diagram of a PEG derivative.

Specifically, in the case of a hydraulic composition having a slump of 8 to 21 cm as measured by the method of JIS A 1101, the PEG derivative should preferably have an IOB value in the organic conception diagram of 0.3 to 1.4, more preferably 0.7 to 1.4, even more preferably 0.7 to 1.2. In the case of a medium-fluidity concrete having a slump flow of 35 to 50 cm as prescribed in the East/Center/West Japan Expressway tunnel construction management guideline and a high-fluidity concrete having a slump flow of 55 to 75 cm as prescribed in the construction edition of the concrete standard specifications 2017, the PEG derivative should preferably have an IOB value in the organic conception diagram of 0.9 to 1.8, more preferably 0.9 to 1.6.

It is noted that the IOB (Inorganic Organic Balance) in the organic conception diagram is a ratio of an inorganic value (IV) to an organic value (OV) determined from the organic conception diagram. That is, IOB = IV/OV (the same holds true, hereinafter). The OV and IV of a certain compound are determined by totaling the predetermined values of groups or sites on the compound across the overall molecule. For the IOB, reference should be made to "Approach to emulsion formulation design p.2-9", Nihon Emulsion Co., Ltd., "What is an emulsion formulation design with organic conception diagram?"

(Non-Patent Document 1).

The PEG derivative may be used alone or in admixture of two or more depending on a particular purpose. When two or more PEG derivatives are used, each PEG derivative has an IOB value in the organic conception diagram of 0.3 to 1.8.

[Weight average molecular weight]

The PEG derivative should have a Mw of 300 to 2,500, preferably 500 to 1,300, more preferably 500 to 1,200 as measured by GPC versus polystyrene standards. If Mw is less than 300, the PEG derivative is poorly dispersible in water. If Mw exceeds 2,500, the PEG derivative is unable to reduce the bleeding of a hydraulic composition.

The Mw of a PEG derivative can be measured versus polystyrene standards by GPC using tetrahydrofuran (THF) as a developing solvent. Specifically, Mw is determined by injecting a test solution into a high-performance liquid chromatogram equipped with a size exclusion column, measuring an elution time, and comparing the measured value with the calibration curve of the standard solution (the same holds true, hereinafter).

In the PEG derivative, the average addition mole number "n" of ethylenoxy groups ($-C_2H_4O-$, EO) dominating the molecular weight is correlated to the IOB value. Then, like the IOB value, the Mw is correlated to the fluidity of a hydraulic composition. Specifically, in the case of a hydraulic composition having a slump of 8 to 21 cm as measured by the method of JIS A 1101, the PEG derivative preferably has a Mw of 300 to 1,300, more preferably 500 to 1,300, even more preferably 500 to 1,200. In the case of a medium-fluidity concrete having a slump flow of 35 to 50 cm as prescribed in the East/Center/West Japan Expressway tunnel construction management guideline and a high-fluidity concrete having a slump flow of 55 to 75 cm as prescribed in the construction edition of the concrete standard specifications 2017, the PEG derivative preferably has a Mw of 700 to 2,500, more preferably 700 to 1,700.

[Structure of PEG derivative]

The PEG derivative is of asymmetric straight or branched structure containing at least one $RCOO(C_2H_4O)_n-$ wherein R is a $C_{10}$-$C_{24}$ straight or branched monovalent hydrocarbon group and n is an integer of 3 to 40 in the molecule and a polyethylene glycol end OH or -OH group as a functional group (that is, not having any functional group other than -OH group at the end).

In the PEG derivative, the number of $RCOO(C_2H_4O)_n-$ in the molecule is at least 1, preferably 1 to 4, most preferably 1.

R is a $C_{10}$-$C_{24}$, preferably $C_{16}$-$C_{22}$ straight or branched monovalent hydrocarbon group. By using said R, improving the fluidity and frost damage resistance of a hydraulic composition and the dispersion of a PEG derivative in water may be ensured. Examples of the monovalent hydrocarbon group R include straight alkyl groups such as lauryl, cetyl, stearyl, behenyl, undecyl, pentadecyl, heptadecyl, and henicosyl, branched alkyl groups such as isostearyl, octyldodecyl, decyltetradecyl, isoheptadecyl, 16-methylhexadecyl, 2-octylundecyl, and 2-decyltridecyl, and straight alkenyl groups such as oleyl. It is preferred from the aspects of availability and handling of a compound that R be selected from straight or branched alkyl groups such as heptadecyl and isoheptadecyl.

The PEG derivative also has an ester bond (-COO-) from the aspect of frost damage resistance.

"n" which is indicative of the average addition mole number of ethylenoxy groups ($-C_2H_4O-$) is an integer of 3 to 40, preferably 5 to 30, more preferably 5 to 20. By using said "n", reducing the bleeding, improving the frost damage resistance and preventing the foaming of a hydraulic composition may be ensured.

The PEG derivative is preferably at least one of compounds having the general formulae (A1) and (A2). The compound having formula (A1) and the compound having formula (A2) are referred to as compounds A1 and A2, respectively.

$$RCOO-(C_2H_4O)_n-H \qquad (A1)$$

$$(RCOO-(C_2H_4O)_{n1})_tR^1((OC_2H_4)_{n2}-OH)_u \qquad (A2)$$

In formulae (A1) and (A2), R is each independently a $C_{10}$-$C_{24}$ straight or branched monovalent hydrocarbon group, $R^1$ is a residue obtained from a polyhydric alcohol having 2 to 5 hydroxy groups by eliminating the hydroxy groups, the residue being a di- to penta-valent $C_2$-$C_5$ straight or branched hydrocarbon group, n indicative of the average addition mole number of ethylenoxy groups ($-C_2H_4O-$) is an integer of 3 to 40, t and u each are an integer of 1 to 4, the sum of t and u is an integer of 2 to 5 (corresponding to the number of hydroxy groups on the polyhydric alcohol from which $R^1$ is obtained), n1 and n2 each are an integer of at least 0 (corresponding to the average addition mole number of ethylenoxy groups ($-C_2H_4O-$)), and $n1\times t+n2\times u$ is an integer of 3 to 30.

[Compound A1]

Compound A1 is a compound of formula (A1) having an IOB value in the organic conception diagram of 0.3 to 1.8 and a Mw of 300 to 2,500 as measured by GPC versus polystyrene standards.

In formula (A1), R is as defined above and each independently a $C_{10}$-$C_{24}$, preferably $C_{16}$-$C_{22}$ straight or branched monovalent hydrocarbon group. By using said R, improving the fluidity and frost damage resistance of a hydraulic composition and the dissolution of a PEG derivative in water may be ensured. Examples of the monovalent hydrocarbon group R are as exemplified above.

In formula (A1), an ester bond (-COO-) is included from the aspect of improving the frost damage resistance of a hydraulic composition, and n is as defined above.

Examples of compound A1 include polyethylene glycol monostearates (the average addition mole number of ethylenoxy groups ($-C_2H_4O-$) is 5, 10, 20 and 30), polyethylene glycol monoisostearates (the average addition mole number of ethylenoxy groups ($-C_2H_4O-$) is 6, 8, 10, 12 and 16), and polyethylene glycol monooleates (the average addition mole number of ethylenoxy groups ($-C_2H_4O-$) is 6 and 10).

[Compound A2]

Compound A2 is a compound of formula (A2) having an IOB value in the organic conception diagram of 0.3 to 1.8 and a Mw of 300 to 2,500 as measured by GPC versus polystyrene standards.

In formula (A2), R is as defined above and each independently a $C_{10}$-$C_{24}$, preferably $C_{16}$-$C_{22}$ straight or branched monovalent hydrocarbon group. By using said R, improving the fluidity and frost damage resistance of a hydraulic composition and the dissolution of a PEG derivative in water may be ensured. Examples of the monovalent hydrocarbon group R are as exemplified above.

In formula (A2), an ester bond (-COO-) is included from the aspect of frost damage resistance.

In formula (A2), $R^1$ is a residue obtained from a polyhydric alcohol having 2 to 5 hydroxy groups, preferably 2 or 3 hydroxy groups by eliminating the hydroxy groups, the residue being a di- to penta-valent, preferably di- or tri-valent $C_2$-$C_5$ straight or branched hydrocarbon group. If the carbon count is less than 2, i.e., equal to 1, the compound is difficult to synthesize. If the carbon count exceeds 5, there is a possibility that a compound is highly hydrophobic and difficultly soluble or dispersible in water.

Exemplary polyhydric alcohols include dihydric alcohols (having 2 hydroxy groups) such as 1,2-butanediol and 1,3-butylene glycol, trihydric alcohols (having 3 hydroxy groups) such as glycerin and trimethylol propane, tetrahydric alcohols (having 4 hydroxy groups) such as diglycerin, erythritol, pentaerythritol, sorbitan and methylglucoside, and pentahydric alcohols (having 5 hydroxy groups) such as xylitol and triglycerin. Of these, di- and trihydric alcohols are preferred from the aspect of preventing a hydraulic composition from foaming, with 1,2-butane diol and 1,3-butylene glycol being more preferred.

In formula (A2), t and u each are an integer of 1 to 4, t is preferably 1 from the aspect of bleeding reduction, u is preferably 1 or 2 from the aspect of preventing a hydraulic composition from foaming. The sum of t and u (i.e., t+u) is an integer of 2 to 5, corresponding to the number of hydroxy groups on the polyhydric alcohol from which $R^1$ is obtained. The sum (t+u) is more preferably 2 or 3, most preferably 2 from the aspect of preventing a hydraulic composition from foaming.

In formula (A2), n1 and n2 each indicative of the average addition mole number of ethylenoxy groups ($-C_2H_4O-$) are an integer of at least 0, and $n1 \times t + n2 \times u$ is an integer of 3 to 30, preferably 5 to 30, more preferably 8 to 20, even more preferably 10 to 20.

Examples of compound A2 include PEG-10BG isostearate (total (n1+n2) of average addition mole numbers of ethylenoxy groups ($-C_2H_4O-$) is 10), PEG-15BG isostearate (total (n1+n2) of average addition mole numbers of ethylenoxy groups ($-C_2H_4O-$) is 15), PEG-20BG isostearate (total (n1+n2) of average addition mole numbers of ethylenoxy groups ($-C_2H_4O-$) is 20), and PEG-25BG isostearate (total (n1+n2) of average addition mole numbers of ethylenoxy groups ($-C_2H_4O-$) is 25).

The PEG derivative which is liquid may be used as such for impregnation of a water-soluble porous powder. Even the PEG derivative which is solid may be used as long as it can be converted to liquid by heating, prior to impregnation of a water-soluble porous powder.

(Water-soluble porous powder)

The water-soluble porous powder is a carrier in the sense that the powder is impregnated with the PEG derivative, which means that the powder carries the PEG derivative thereon so that the PEG derivative may be handled in powder form. The water-soluble porous powder is composed of water-soluble particles which are so porous that they may be impregnated with the PEG derivative, and formed of a material which does not adversely affect the properties of a hydraulic composition when dissolved in water. Exemplary of the material are water-soluble porous polysaccharides and sodium carbonate. Inter alia, water-soluble porous polysaccharides are preferred from the aspect of suppressing alkali silica reaction of a hydraulic composition.

Examples of the water-soluble porous polysaccharides include water-soluble porous cellulose ethers, water-soluble porous maltodextrin, and water-soluble porous dextrin, with water-soluble porous maltodextrin being preferred from the aspects of reducing the viscosity of a hydraulic composition and promoting the dissolution (i.e., leaching of the PEG derivative) during preparation of a hydraulic composition.

The water-soluble porous cellulose ether is selected from those of water-soluble cellulose ethers in powder form having a bulk density of preferably 0.10 to 0.25 $g/cm^3$, more preferably 0.14 to 0.20 $g/cm^3$.

Also, the water-soluble porous cellulose ether is obtained by tailoring a water-soluble cellulose ether to be porous, i.e., to be impregnatable. With respect to the influence on a concrete composition, the water-soluble porous cellulose ether is similarly effective to a water-soluble cellulose ether to be described later.

The water-soluble porous maltodextrin and water-soluble porous dextrin are prepared from solutions of decomposition products of starch and/or reducing starch.

(Decomposition product of starch)

The decomposition product of starch encompasses products obtained from hydrolysis of starches by acid decomposition, alkali decomposition, enzyme decomposition, roasting treatment, and combinations thereof. The decomposition product of starch may contain one hydrolysate or a plurality of hydrolysates. Examples of the starch used herein include naturally occurring starches such as tapioca starch, sago starch, white-potato starch, wheat starch, rice starch, sweet-potato starch, corn starch, and waxy corn starch; and modified starches such as acetylated distarch phosphate, acetylated oxidised starch, acetylated distarch adipate, starch sodium octenyl succinate, starch acetate, oxidised starch, hydroxypropyl distarch phosphate, hydroxypropyl starch, monostarch phosphate, distarch phosphate, and phosphated distarch phosphate.

(Decomposition product of reducing starch)

The decomposition product of reducing starch is obtained by reducing the aforementioned decomposition product of starch into a sugar alcohol form. The decomposition product of reducing starch may contain one decomposition product or a plurality of decomposition products.

(Solution)

The solution of the decomposition product of starch and/or the decomposition product of reducing starch is obtained by dissolving at least one of the decomposition products of starch and decomposition products of reducing starch in a solvent. The solvent used herein is not particularly limited. For example, water and hydrous alcohols may be used, with water being preferred. The concentration of the decomposition product of starch and/or reducing starch in the solvent is preferably 10 to 60% by weight, more preferably 20 to 55% by weight, even more preferably 30 to 50% by weight as the total weight of decomposition products. Notably, a solution of a decomposition product of starch having a low dextrose

equivalent (DE) tends to have a high viscosity. Thus, when a decomposed starch having a low DE is used, the concentration of a solution is preferably set low so as to avoid an excessive viscosity buildup of the solution. For example, when DE is less than 6, the solution concentration is set below 50% by weight.

The water-soluble porous maltodextrin or water-soluble porous dextrin is prepared by drying the resulting solution on a drum dryer. The drum dryer used for drying operation may be any of well-known single and double drum dryers, with the double drum dryers being preferred. The dryer operating conditions are not particularly limited as long as acceptable water-soluble porous maltodextrin or dextrin is obtained. Although ordinary temperature, pressure and rotational speed may be used, a drum internal pressure of 300 to 600 kPa, a temperature of 140 to 170°C, and a rotational speed of 0.8 to 1.33 rpm are preferred. In general, bulkier water-soluble porous maltodextrin or dextrin is obtained at a higher drum internal vapor temperature. Since too high a temperature can cause the powder to burn on the wall, it is recommended to select drying conditions from the above-mentioned ranges.

The water-soluble porous powder preferably has a bulk density of 0.10 to 0.25 g/$cm^3$, more preferably 0.14 to 0.20 g/$cm^3$. By using said bulk density, preferable ease of impregnation, and improving working efficiency and cost may be ensured.

The bulk density (or bulk specific gravity) is determined by the following method (the same holds true, hereinafter). A fully dry measuring cylinder is statically filled with 10 g-equivalent of a water-soluble porous powder under test. The volume (ml) of the powder is read from the graduations on the cylinder. This operation is repeated 10 times. An average volume A (ml) is calculated from the measured volumes. The bulk density is computed according to the following equation.

$$\text{bulk density (g/cm}^3\text{)} = 10/A$$

In an integral molecular weight distribution of the water-soluble porous powder as analyzed by GPC, an accumulated value of the concentration fraction at a molecular weight of 10,000 (i.e., the proportion of a peak area at a molecular weight of 10,000 or less relative to the overall peak area in a differential molecular weight distribution as analyzed by GPC) is preferably 30 to 90%, more preferably 45 to 85%. By using said accumulated value of the concentration fraction at a molecular weight of 10,000, preferable dissolution and bleeding reduction may be ensured.

The measurement of integral molecular weight distribution and differential molecular weight distribution is carried out by injecting a test solution into a high-performance liquid chromatograph (or GPC) equipped with a size exclusion column, measuring an elution time, calculating a molecular weight on the basis of the calibration line of standard solutions. The accumulated value of the concentration fraction at a molecular weight of 10,000 in the integral molecular weight distribution is determined from these data. For example, the accumulated value of the concentration fraction at a molecular weight of 10,000 is determined from an integral molecular weight distribution of a water-soluble porous powder analyzed using a GPC analyzer (Shodex GPC-101, Showa Denko K.K.), detector (differential refraction index meter RI-71S (Showa Denko K.K.), and columns (two connected TSK-gel $GMPW_{XL}$ (diameter 7.8 mm × 300 mm), Tosoh Corp.) (the same holds true, hereinafter).

The water-soluble porous powder, specifically water-soluble porous maltodextrin or water-soluble porous dextrin preferably has a dextrose equivalent (DE) of 2 to 18, more preferably 6 to 16, even more preferably 9 to 15. By using said DE, preferable dissolution and bleeding reduction may be ensured.

As used herein, the "dextrose equivalent" (DE) gives an index of percent decomposition (or saccharification) of decomposed starch. It is an analytical value by the modified Somogyi method of expressing reducing sugar in a sample as grape sugar (or D-glucose) according to the following formula and calculating a percentage thereof based on solids (the same holds true, hereinafter).

DE = {weight of direct reducing sugar (expressed as grape sugar)} / (weight of solids) × 100

The maximum of DE is 100, which means that all solids obtained from hydrolysis of starch are grape sugar. When starch is completely decomposed, the decomposed product is 100% grape sugar, indicating a DE of 100. A smaller DE corresponds to a lower degree of decomposition.

The water-soluble porous powder used herein is not particularly limited as long as the foregoing requirements are met. Commercially available products may be used, for example, Pineflow (Matsutani Chemical Industry Co., Ltd.) which is porous decomposed starch or porous dextrin and Oil Q No. 50 (Nippon Starch Chemical Co., Ltd.) which is porous modified starch.

The method of impregnating a water-soluble porous powder with a PEG derivative is not particularly limited. Any well-known methods of impregnating powders with liquids may be used. One exemplary method involves admitting a water-soluble porous powder into a jacket of a compact agitation granulator, rotating the blade and chopper at a rotational speed within ordinary granulation conditions, and adding dropwise a PEG derivative into the jacket. When the PEG

derivative is solid or semisolid at room temperature, the PEG derivative is pre-heated and melted to a liquid state before it is added for impregnation. In this case, the jacket is preferably controlled at a temperature near the melting point of the PEG derivative. Any of well-known powder mixers such as agitation granulators, V-type mixers, ribbon mixers, Nauta mixer, and super mixers may be used.

Preferably, the powder obtained by impregnating the water-soluble porous powder with the PEG derivative is then classified through a sieve having an opening of 300 μm, and the undersize fraction is used as the powdery additive for hydraulic compositions.

The amount of PEG derivative with which the water-soluble porous powder is impregnated may be determined so as to avoid that the powdery additive is rendered sticky by an excessive impregnation amount of PEG derivative. Specifically, the weight ratio of the water-soluble porous powder to the PEG derivative is preferably 1.5/1 to 3.3/1, more preferably from 2.0/1 to 2.5/1. A too much amount of the PEG derivative may render the powdery additive sticky, aggravating powder fluidity. A too much amount of the water-soluble porous powder may retard a hydraulic composition from setting, with a possibility of bleeding.

In the powdery additive, the PEG derivative and the water-soluble porous powder are preferably present in a weight ratio of from 23.3:76.7 to 40:60, more preferably from 28.6:71.4 to 33.3:66.7. By using said weight ratio, preferable powder fluidity and bleeding reduction by setting retardation may be ensured.

The water-soluble porous powder prior to impregnation with the PEG derivative should preferably have an average particle size of 10 to 230 μm, more preferably 10 to 150 μm as measured by the dry laser method. By using said average particle size, preferable preventing fluidity lowering of a hydraulic composition due to poor dissolution of the powdery additive may be ensured. The volume proportion of particles having a particle size of at least 300 μm is preferably 0 to 10%, more preferably 0 to 5%. If the volume proportion of particles having a particle size of at least 300 μm exceeds 10%, preferably the powder is classified through a sieve having an opening of 300 μm, and the undersize fraction is used.

The powdery additive, that is, the water-soluble porous powder impregnated with the PEG derivative should preferably have an average particle size of 40 to 280 μm, more preferably 50 to 200 μm, even more preferably 60 to 150 μm as measured by the dry laser method. By using said average particle size, preferable preventing fluidity lowering of a hydraulic composition due to poor dissolution of the powdery additive may be ensured. The volume proportion of particles having a particle size of at least 300 μm is preferably 0 to 10%, more preferably 0 to 3%.

The average particle size (D50 or median diameter) of the water-soluble porous powder and the powdery additive and the volume proportion of particles having a particle size of at least 300 μm are determined according to the dry laser diffraction method by using a Master Sizer 3000 (Malvern Panalytical Ltd.) or HELOS (Sympatec GmbH), ejecting a powder sample along with compressed air, irradiating laser radiation thereto, measuring the diffraction intensity, and calculating a volume base average particle diameter therefrom (the same holds true, hereinafter).

In blending the powdery additive in a hydraulic composition, the additive may be mixed with a water-soluble cellulose ether to form a powdery thickener (to be described later) and blended as the thickener. Alternatively, the powdery additive and a water-soluble cellulose ether may be separately blended.

<Powdery thickener>

Another embodiment of the invention is a powdery thickener for hydraulic compositions, comprising the powdery additive defined above and a water-soluble cellulose ether.

The water-soluble cellulose ether used herein is nonionic. Examples thereof include alkyl celluloses such as methyl cellulose, hydroxyalkyl celluloses such as hydroxyethyl cellulose and hydroxypropyl cellulose, and hydroxyalkyl alkyl celluloses such as hydroxypropyl methyl cellulose, hydroxyethyl methyl cellulose, and hydroxyethyl ethyl cellulose. The cellulose ether may be used alone or in admixture of two or more depending on a particular purpose.

Of the alkyl celluloses, methyl cellulose (MC) preferably has a DS of methoxy of 1.00 to 2.20, more preferably 1.20 to 2.00.

Of the hydroxyalkyl celluloses, hydroxyethyl cellulose (HEC) preferably has a MS of hydroxyethoxy of 0.30 to 3.00, more preferably 0.50 to 2.80. Hydroxypropyl cellulose (HPC) preferably has a MS of hydroxypropoxy of 0.30 to 3.30, more preferably 0.50 to 3.00.

Of the hydroxyalkyl alkyl celluloses, hydroxypropyl methyl cellulose (HPMC) preferably has a DS of methoxy of 1.00 to 2.20, more preferably 1.30 to 1.90 and a MS of hydroxypropoxy of 0.10 to 0.60, more preferably 0.10 to 0.50. Hydroxyethyl methyl cellulose (HEMC) preferably has a DS of methoxy of 1.00 to 2.20, more preferably 1.30 to 1.90 and a MS of hydroxyethoxy of 0.10 to 0.60, more preferably 0.20 to 0.40. Hydroxyethyl ethyl cellulose (HEEC) preferably has a DS of ethoxy of 1.00 to 2.20, more preferably 1.20 to 2.00 and a MS of hydroxyethoxy of 0.05 to 0.60, more preferably 0.10 to 0.50.

It is noted that the degree of substitution (DS) refers to the average number of alkoxy groups per anhydrous glucose unit. The molar substitution (MS) refers to the average moles of hydroxyalkoxy group per mole of anhydrous glucose. The DS of alkoxy group and the MS of hydroxyalkoxy group of the alkyl cellulose, hydroxyalkyl cellulose and

hydroxyalkyl alkyl cellulose may be determined from conversion of the value measured according to the analysis of DS of hypromellose (hydroxypropyl methyl cellulose) prescribed in the Japanese Pharmacopoeia, 18th Edition (the same holds true, hereinafter).

A 2 wt% aqueous solution of the cellulose ether preferably has a viscosity at 20°C of 15 to 450,000 mPa·s, more preferably 50 to 370,000 mPa s, and even more preferably 80 to 350,000 mPa s. By using said 2 wt% aqueous solution, preferable imparting a desired viscosity to a hydraulic composition may be ensured. For the viscosity at 20°C of a 2 wt% aqueous solution of a water-soluble cellulose ether, when the viscosity is 600 mPa·s or higher, measurement is made with a single cylinder rotational viscometer corresponding to the rotational viscometer in the viscosity measurement method of the general test prescribed in the Japanese Pharmacopoeia, 18th Edition. When the viscosity is lower than 600 mPa s, measurement is made with a Ubbelohde viscometer corresponding to the capillary viscometer in the viscosity measurement method of the general test prescribed in the Japanese Pharmacopoeia, 18th Edition (the same holds true, hereinafter).

In the case of a low-fluidity concrete composition like normal concrete, a cellulose ether having a low molecular weight or low viscosity is preferred from the aspect of fluidity drop. In the case of a high-fluidity concrete composition where the phenomenon of fluidity drop does not occur, a cellulose ether having a high molecular weight or high viscosity is preferred from the aspect of expense. Specifically, for use in normal concrete compositions, a 2 wt% aqueous solution of the cellulose ether preferably has a viscosity at 20°C of 15 to 80,000 mPa s, more preferably 50 to 50,000 mPa s, and even more preferably 80 to 35,000 mPa·s. For use in high-fluidity concrete compositions, a 2 wt% aqueous solution of the cellulose ether preferably has a viscosity at 20°C of 50,000 to 450,000 mPa s, more preferably 60,000 to 370,000 mPa·s, and even more preferably 70,000 to 350,000 mPa·s.

Of the water-soluble cellulose ethers, hydroxyalkyl alkyl celluloses such as hydroxypropyl methyl cellulose (HPMC) and hydroxyethyl methyl cellulose (HEMC) are preferred from the aspects of meeting both fluidity and bleeding reduction of a hydraulic composition. There may be used either a commercially available cellulose ether or a cellulose ether prepared by a well-known method.

(Other components)

In addition to the PEG derivative, water-soluble porous powder, and water-soluble cellulose ether, the powdery thickener may contain other components such as a water repellent, gum, and defoamer. The other components may be introduced as being contained in the hydraulic composition. Particularly when the other components are liquid, they are preferably used as a solution or dispersion in water. Examples and addition amount of the defoamer are described below in conjunction with a hydraulic composition.

[Water repellent]

The water repellent used herein is a substance capable of increasing a contact angle with water to impart water-repelling properties. The water repellent is not particularly limited as long as it is commonly used in conventional hydraulic compositions. Examples include hydrocarbons such as liquid paraffin, squalane, paraffin, and vaseline; waxes such as beeswax, jojoba oil, and carnauba wax; triglycerides such as glyceryl triisostearate and glyceryl trioctanoate; ester oils such as isocetyl myristate and cetyl palmitate; higher alcohols such as cetanol and stearyl alcohol; plant oils such as olive oil and castor oil; fatty acids such as stearic acid; and fatty acid salts such as calcium stearate, sodium stearate, magnesium stearate, calcium isostearate, sodium isostearate, and magnesium isostearate. Inter alia, fatty acid salts are preferred, with calcium stearate being more preferred from the aspect of reducing the addition amount. For example, calcium stearate is commercially available from FUJIFII,M Wako Pure Chemical Corp.

From the aspect of handling, the water repellent is preferably added in powder form.

When used, the water repellent is preferably added in an amount of 0.01 to 30% by weight, more preferably 1.8 to 20% by weight based on the powdery thickener. When the thickener is added to a hydraulic composition (specifically concrete composition), the amount of the water repellent added per cubic meters ($m^3$) of the hydraulic composition is preferably 0.05 to 200 g/$m^3$, more preferably 10 to 100 g/$m^3$. By adding said amount of the water repellent, preferable imparting water repellency may be ensured.

[Gum]

The gum used herein is not particularly limited as long as it is commonly used in conventional hydraulic compositions. Among others, diutan gum, welan gum, xanthan gum, and gellan gum are preferred. By using said gum, preferable both fluidity and bleeding reduction of a hydraulic composition may be ensured. The gum may be used alone or in admixture.

Diutan gum is composed by sugar units of D-glucose, D-glucuronic acid, D-glucose with L-rhamnose, and two L-rhamnoses, and commercially available, for example, under the trade name of KELCO-CRETE-DG-F from CP Kelco Inc. Welan gum has a backbone consisting of D-glucose, D-glucuronic acid and L-rhamnose in a ratio of 2:2:1, to which L-rhamnose and L-mannose side chains are attached, and is commercially available, for example, under the trade name of CP KELCO K1A-96 from CP Kelco Inc. Xanthan gum has a backbone of β-1,4-bond D-glucose like cellulose, with side chains of two mannoses and one glucuronic acid, and is commercially available, for example, under the trade name of KELZAN from Sansho Co., Ltd. Gellan gum is a hetero-polysaccharide consisting of four repeating units of D-glucose, D-glucuronic acid, and L-rhamnose in a ratio of 2:1:1, and is commercially available, for example, under the trade name of KELCOGELAFT from CP Kelco Inc.

The gum may be added either in powder form or in aqueous solution form. From the aspect of handling, the gum is preferably added in powder form.

When used, the gum is preferably added in an amount of 0.01 to 4% by weight, more preferably 0.05 to 3% by weight based on the powdery thickener. When the thickener is added to a hydraulic composition (specifically concrete composition), the amount of the gum added per cubic meters ($m^3$) of the hydraulic composition is preferably 0 to 100 $g/m^3$, more preferably 0 to 30 $g/m^3$. By adding said amount of the gum, preferable both fluidity and bleeding reduction may be ensured.

In the powdery thickener, the amount of the PEG derivative is preferably 3 to 30% by weight, more preferably 5 to 28% by weight, even more preferably 7 to 27% by weight. The amount of the porous powder is preferably 6 to 60% by weight, more preferably 10 to 56% by weight, even more preferably 14 to 54% by weight of the powdery thickener.

The PEG derivative and the porous powder are preferably present in a weight ratio of from 23.3:76.7 to 40:60, more preferably from 28.6:71.4 to 33.3:66.7, as mentioned above. Differently stated, the weight ratio of the porous powder to the PEG derivative is preferably from 1.5/1 to 3.3/1, more preferably from 2.0/1 to 2.5/1.

The content of the water-soluble cellulose ether is preferably 20 to 90.9% by weight, more preferably 22 to 80% by weight, even more preferably 24 to 75% by weight. The total of the water-soluble cellulose ether, PEG derivative, water-soluble porous powder, and other components if any is 100% by weight.

In preparing the powdery thickener, any conventional powder mixing methods may be used. For example, a well-known powder mixer such as agitation granulator, V-type mixer, ribbon mixer, Nauta mixer, or super mixer is used. The powdery additive (i.e., water-soluble porous powder impregnated with PEG derivative), the water-soluble cellulose ether and other components if any are admitted into the mixer where the contents are agitated and mixed at a standard rotational speed for several tens of seconds to several minutes.

<Hydraulic composition>

In a further aspect, the invention provides a hydraulic composition which encompasses the following three embodiments:

a hydraulic composition (i) comprising at least the powdery additive, a hydraulic substance (specifically cement), and water;
a hydraulic composition (ii) comprising the hydraulic composition (i) and a water-soluble cellulose ether; and
a hydraulic composition (iii) comprising at least the powdery thickener, a hydraulic substance (specifically cement), and water.

Exemplary applications of the hydraulic composition include concrete compositions, mortar compositions and cement paste compositions.

The concrete composition contains a fine aggregate (specifically sand), a coarse aggregate (specifically gravel), and a water-reducing agent as well as the hydraulic composition (i), (ii) or (iii). Preferably, the concrete composition has a slump of 8 to 21 cm, more preferably 9 to 19 cm as measured by the method of JIS A 1101 and a compressive strength of 18 to 45 $N/mm^2$, more preferably 25 to 40 $N/mm^2$ as measured by the method of JIS A 1108 at an age of 28 days.

Examples of the concrete composition include normal concrete, under-water concrete, spray concrete, cold weather concrete, hot weather concrete, mass concrete, light-weight concrete, seawater-affected concrete, short fiber-reinforced concrete, dam concrete, pavement concrete, and prestressed concrete.

The mortar composition contains a fine aggregate (specifically sand) as well as the hydraulic composition (i), (ii) or (iii). Examples of the mortar include tiling mortar, repairing mortar, and self-leveling agents.

The cement paste composition consists of the hydraulic composition (i), (ii) or (iii) and examples thereof include adhesives to tile-related inorganic building materials, and grout for filling the gap between members.

The amount of the powdery additive added to hydraulic composition (i) or (ii) or the amount of the powdery thickener added to hydraulic composition (iii) per cubic meters ($m^3$) of the hydraulic composition (specifically concrete composition) is preferably 0.025 to 10.0 $kg/m^3$, more preferably 0.05 to 5.0 $kg/m^3$. By adding said amount of the powdery additive or powdery thickener, preferable improving the fluidity, bleeding reduction and frost damage resistance may be

ensured.

The amount of the PEG derivative added per cubic meters ($m^3$) of the hydraulic composition (specifically concrete composition) is preferably 10 to 300 g/$m^3$, more preferably 10 to 150 g/$m^3$. By adding said amount of the PEG derivative, preferable improving the fluidity, bleeding reduction and frost damage resistance may be ensured.

Since the weight ratio of the porous powder to the PEG derivative is preferably from 1.5 to 3.3, the amount of the water-soluble porous powder added per cubic meters ($m^3$) of the hydraulic composition (specifically concrete composition) is preferably 15 to 990 g/$m^3$, more preferably 15 to 495 g/$m^3$.

The amount of the water-soluble cellulose ether added per cubic meters ($m^3$) of the hydraulic composition (specifically concrete composition) is preferably 10 to 1,500 g/$m^3$, more preferably 15 to 1,000 g/$m^3$. By adding said amount of the water-soluble cellulose ether, preferable both fluidity and bleeding reduction of the hydraulic composition may be ensured.

The hydraulic substance refers to cement and an inorganic powder-based admixture among components to be blended in the preparation of the hydraulic composition. Cement may be used alone or in combination with an admixture as long as desired strength, durability and other properties are obtained. Examples of the cement include Portland cement (e.g., normal Portland cement, high-early-strength Portland cement, ultrahigh-early-strength Portland cement, moderate-heat Portland cement), mix cement (e.g., blast-furnace slag cement, silica cement, fly-ash cement), and special cement (e.g., alumina cement). Examples of the admixture include slag, fly-ash, fumed silica, and finely divided lime.

When the hydraulic composition is a concrete composition, the amount of the hydraulic substance added is preferably 270 to 550 kg/$m^3$ of the concrete composition. When the hydraulic composition is a mortar composition, the amount of the hydraulic substance added is preferably 300 to 900 kg/$m^3$ of the mortar composition. When the hydraulic composition is a cement paste composition, the amount of the hydraulic substance added is preferably 900 to 1,600 kg/$m^3$ of the cement paste composition. These amounts are preferred from the aspect of strength.

Exemplary of the water are tap water and "water other than tap water" prescribed in JIS A 5308. The unit amount of water is preferably up to 185 kg/$m^3$ of the concrete composition.

The hydraulic composition preferably has a water/hydraulic substance ratio of 30 to 70% by weight, more preferably 35 to 65% by weight. By using said water/hydraulic substance ratio, preferable preventing material separation therein may be ensured.

The hydraulic composition may further contain an aggregate if necessary. Suitable aggregates include fine aggregates and coarse aggregates. Examples of the fine aggregate include river sand, pit sand, land sand, crushed sand, and silica sand. The particle size (maximum size) of the fine aggregate is preferably up to 5 mm. Examples of the coarse aggregate include river gravel, pit gravel, land gravel, and crushed stone. The particle size (maximum size) of the coarse aggregate is larger than that of the fine aggregate, and preferably up to 40 mm, more preferably up to 25 mm.

When the hydraulic composition is a concrete composition, the content of the fine aggregate is preferably 600 to 1,100 kg, more preferably 700 to 1,000 kg per $m^3$ of the concrete composition. When the hydraulic composition is a mortar composition, the content of the fine aggregate is preferably 900 to 1,600 kg, more preferably 1,000 to 1,400 kg per $m^3$ of the mortar composition.

When the hydraulic composition is a concrete composition, the content of the coarse aggregate is preferably 600 to 1,000 kg, more preferably 650 to 900 kg per $m^3$ of the concrete composition.

When the hydraulic composition is a concrete composition, the proportion of fine aggregate, as defined below, is preferably 30 to 65% by volume, more preferably 35 to 60% by volume, even more preferably 40 to 55% by volume based on the total volume of the aggregates. By using said proportion of fine aggregate, preferable retention of fluidity or sufficient strength may be ensured.

$$\text{Fine aggregate proportion (vol\%)} =$$

$$\text{(volume of fine aggregate)/(volume of fine aggregate + volume of coarse aggregate)} \times 100$$

An admixture may be added to the hydraulic composition, if necessary, for the purposes of restraining heat generation upon setting and enhancing durability after setting. Suitable admixtures include blast furnace slag and fly-ash.

Further, a water-reducing agent may be added to the hydraulic composition, if necessary, for retaining high fluidity with a smaller amount of water. Suitable water-reducing agents include lignin, polycarboxylic acid, and melamine based agents. Exemplary of the lignin are lignin sulfonic acid salts and derivatives thereof. Exemplary of the polycarboxylic acid are polycarboxylic acid ethers, composites of polycarboxylic acid ethers with crosslinked polymers, composites of polycarboxylic acid ethers with oriented polymers, composites of polycarboxylic acid ethers with highly modified polymers, polyether carboxylic acid-based polymers, maleic acid copolymers, maleate copolymers, maleic acid derivative copolymers, carboxyl-containing polyethers, sulfone-terminated polycarboxylate-containing multiple polymers, polycarboxylic acid-based graft copolymers, polycarboxylic acid-based compounds, and polycarboxylic acid ether-based polymers. Exemplary of the melamine are melamine-sulfonic acid-formaldehyde condensates, melamine-sulfonate condensates,

and melamine-sulfonate-polyol condensates.

The amount of the water-reducing agent per $m^3$ of the hydraulic composition (specifically concrete composition) is preferably 0.50 to 2.5% by weight, more preferably 0.5 to 1% by weight based on the unit cement amount per m3. Two or more water-reducing agents may be used when the desired fluidity is not obtained. If necessary, a liquid water-reducing agent may be used.

An air-entraining (AE) agent may be added to the hydraulic composition, if necessary, for providing the desired air content and rendering the hydraulic composition durable. Suitable AE agents include anionic surfactants, cationic surfactants, nonionic surfactants, ampholytic surfactants, and rosin-based surfactants. Examples of the anionic surfactant include resin acid salt, carboxylic acid, sulfate, sulfonic acid, and phosphate type surfactants. Examples of the cationic surfactant include amine salt, primary amine salt, secondary amine salt, tertiary amine salt, and quaternary amine salt type surfactants. Examples of the nonionic surfactant include ester, ester-ether, ether, and alkanolamide type surfactants. Examples of the ampholytic surfactant include amino acid and sulfobetaine type surfactants. Examples of the rosin-based surfactant include abietic acid, neoabietic acid, palustric acid, pimaric acid, isopimaric acid, and dehydroabetic acid.

The amount of the AE agent used per cubic meters of the hydraulic composition (specifically concrete composition) is preferably 0.0001 to 0.050% by weight, more preferably 0.0001 to 0.01% by weight based on the unit cement amount per $m^3$.

A defoamer may be added to the hydraulic composition (specifically concrete composition) or powdery thickener, if necessary, for imparting strength to the hydraulic composition. Suitable defoamers include oxyalkylene, silicone, alcohol, and fatty acid ester-based defoamers from the aspect of defoaming ability. Inter alia, oxyalkylene-based defoamers are preferred from the aspect of frost damage resistance.

Examples of the oxyalkylene-based defoamer include polyoxyalkylenes such as (poly)oxyethylene (poly) oxypropylene adducts; (poly)oxyalkylene alkyl ethers such as diethylene glycol heptyl ether, polyoxyethylene oleyl ether, polyoxypropylene butyl ether, polyoxyethylene polyoxypropylene 2-ethylhexyl ether, and oxyethylene oxypropylene adducts to higher alcohols of at least 8 carbon atoms or secondary alcohols of 12 to 14 carbon atoms; (poly)oxyalkylene (alkyl) aryl ethers such as polyoxypropylene phenyl ether and polyoxyethylene nonylphenyl ether; acetylene ethers obtained from addition polymerization of alkylene oxides to acetylene alcohols, for example, 2,4,7,9-tetramethyl-5-decyne-4,7-diol, 2,5-dimethyl-3-hexyne-2,5-diol, and 3-methyl-1-butyn-3-ol; (poly)oxyalkylene fatty acid esters such as diethylene glycol oleate, diethylene glycol laurate, and ethylene glycol distearate; (poly)oxyalkylene sorbitan fatty acid esters such as polyoxyethylene sorbitan monolaurate and polyoxyethylene sorbitan trioleate; (poly)oxyalkylene alkyl (aryl) ether sulfuric acid ester salts such as polyoxypropylene methyl ether sodium sulfate and polyoxyethylene dodecylphenol ether sodium sulfate; (poly)oxylalkylene alkyl phosphoric acid esters such as (poly)oxyethylene stearyl phosphate; (poly)oxyalkylene alkyl amines such as polyoxyethylene lauryl amine; and polyoxyalkylene amides.

Examples of the silicone-based defoamer include dimethylsilicone oil, silicone paste, silicone emulsions, organic modified polysiloxanes (e.g., polyorganosiloxanes such as dimethylpolysiloxane), and fluorosilicone oil.

Examples of the alcohol-based defoamer include octyl alcohol, 2-ethylhexyl alcohol, hexadecyl alcohol, acetylene alcohol, and glycols.

Examples of the fatty acid ester-based defoamer include glycerol monolicinolate, alkenyl succinate derivatives, sorbitol monolaurate, sorbitol trioleate, and natural wax.

When used, the defoamer is preferably added in an amount of 0 to 16% by weight, more preferably 0.002 to 10% by weight based on the water-reducing agent. In another embodiment wherein the defoamer is added to the powdery thickener, the content of the defoamer is preferably 0.01 to 10% by weight, more preferably 0.05 to 8% by weight based on the thickener.

A setting accelerator such as calcium chloride, lithium chloride or calcium formate and a setting retarder such as sodium citrate or sodium gluconate may be added to the hydraulic composition, if necessary, for the purposes of managing the physical properties of a fresh hydraulic composition (fresh concrete, fresh mortar or fresh cement paste) immediately after mixing.

The amount of the setting retarder used is preferably 0.3 to 1.2% by weight based on the unit cement amount per $m^3$.

Further, hauyne and lime-based expansive additives may be added to the hydraulic composition, if necessary, for the purposes of preventing cracking by shrinkage upon setting and drying, and preventing cracking by thermal stresses associated with the heat of hydration of cement.

With respect to the amount of air voids in the hydraulic composition, it is preferred for enhancing frost damage resistance to reduce large air voids having a diameter of more than 500 $\mu$m to 2,000 $\mu$m and to increase small air voids having a diameter of more than 50 $\mu$m to 500 $\mu$m. As an index for evaluating the size of air voids, a coefficient of air void spacing is used. It is believed that the frost damage resistance is better when the coefficient of air void spacing is lower than 250 $\mu$m. The coefficient of air void spacing is measured by an air void analyzer as will be described in Examples. Since the coefficient of air void spacing varies with the increasing or decreasing amount of air in evaluating the coefficient of air void spacing, evaluation is preferably made after unifying the amounts of air in the concrete and mortar compositions.

<Method of preparing hydraulic composition>

The method of preparing the hydraulic composition according to the invention includes at least the step of mixing the components of the hydraulic composition and further includes the step of adding the powdery additive defined herein or the powdery thickener defined herein in the step of mixing the components of the hydraulic composition. Specifically, the inventive method encompasses the following three embodiments:

method (I) of preparing a hydraulic composition, which is a method of preparing the hydraulic composition (i) containing a hydraulic substance, water, and PEG derivative, the method including the step of admitting the powdery additive to the step of mixing the components of the hydraulic composition;
method (II) of preparing a hydraulic composition, which is a method of preparing the hydraulic composition (ii) containing a hydraulic substance, water, water-soluble cellulose ether, and PEG derivative, the method including the step of admitting the powdery additive to the step of mixing the components of the hydraulic composition; and
method (III) of preparing a hydraulic composition, which is a method of preparing the hydraulic composition (iii) containing a hydraulic substance, water, water-soluble cellulose ether, and PEG derivative, the method including the step of admitting the powdery thickener to the step of mixing the components of the hydraulic composition.

In all of the methods (I), (II) and (III) of preparing a hydraulic composition, the hydraulic composition is preferably a concrete composition further comprising a fine aggregate, a coarse aggregate, and a water-reducing agent, the concrete composition having a slump of 8 to 21 cm as measured by the method of JIS A 1101 and a compressive strength of 18 to 45 $N/mm^2$ as measured by the method of JIS A 1108 at an age of 28 days.
Also preferably, the step of mixing the components of the hydraulic composition includes dry mixing all powdery components other than liquid components such as water, adding water and optionally a liquid water-reducing agent to the dry mix, and mixing the contents, the powdery additive or powdery thickener being admitted to the dry mixing step.
For example, a forced two-impeller mixer is charged with the powdery additive or powdery thickener, a hydraulic substance, optionally aggregates (fine and coarse aggregates), further optionally a defoamer, followed by dry mixing. Thereafter, water is added to the dry mix and mixed to form hydraulic composition (i) or (iii). Alternatively, a forced two-impeller mixer is charged with the powdery additive, a water-soluble cellulose ether, a hydraulic substance, optionally aggregates (fine and coarse aggregates), further optionally a defoamer, followed by dry mixing. Thereafter, water is added to the dry mix and mixed to form hydraulic composition (ii). The powdery additive or powdery thickener used in these methods is in powder form and thus easy to handle, which ensures that hydraulic compositions (i), (ii) and (iii) are readily prepared.
In the above-mentioned way, there are obtained the powdery additive and powdery thickener capable of improving the fluidity, bleeding, and frost damage resistance of hydraulic compositions, and the hydraulic composition containing the additive or thickener.

## EXAMPLES

Examples of the invention are given below by way of illustration and not by way of limitation.

I) Preparation of powdery additive and powdery thickener

A powdery additive and powdery thickener for hydraulic compositions were prepared using the following ingredients.

<Ingredients>

(1) PEG derivative: specified in Table 1

<Calculation of IOB value>

The IOB (Inorganic Organic Balance) value of a PEG derivative was determined as follows.
The organic value (OV) and inorganic value (IV) of a compound of interest were determined by totaling the predetermined values of groups or sites on the compound across the overall molecule. For the predetermined values of groups or sites on the compound, reference was made to "Approach to emulsion formulation design p.2-9", Nihon Emulsion Co., Ltd., "What is an emulsion formulation design with organic conception diagram"

(Non-Patent Document 1), FIG. 2 "Exemplary calculation method" on p.2 and Annexed

Table 1 "Inorganic Group, Organic Group and Organic/Inorganic Group Table". The IOB value was obtained by applying the IV and OV to the following formula.

$$\text{IOB value} = \text{IV}/\text{OV}$$

One calculation example is shown below.

A1: In the case of polyethylene glycol monostearate ($C_{17}H_{35}COO(C_2H_4O)_{10}H$), the structural formula was determined, like [$C_{17}H_{35}CO{\cdot}OCH_2CH_2(OCH_2CH_2)_{10\text{-}1}$-OH], by deforming -$C_2H_4$- in the first one of repeating units ($C_2H_4O$) and -COO- bonded thereto to (-COOR-) -$OCH_2CH_2$- and deforming -O-$(C_2H_4O)_{10\text{-}1}$H to -$(OCH_2CH_2)_{10\text{-}1}$-OH in $COO(C_2H_4O)_{10}H$.

•

$$\text{OV} = 38\ (\text{number of C}) \times 20\ (\text{OV of C}) = 760$$

•

IV = 60 (IV of -COOR) + 75 (IV of -$OCH_2CH_2$) × 9 (number of -$OCH_2CH_2$) + 100 (IV of -OH) = 835

From the above-mentioned values, an IOB value of 835/760 ≅ 1.10 was obtained.

<Measurement of Mw>

The Mw was measured as a weight average molecular weight by GPC analysis using a GPC system HLC-8220GPC (Tosoh Corp.) with a detector (differential refraction index meter, RI-71S by Showa Denko K.K.), columns (TSK-gel G5000HxL (7.8×300 mm)×1, G4000HxL (7.8×300 mm)×1, G3000HxL (7.8×300 mm)×1, and G2000HxL (7.8×300 mm)×1 (Tosoh Corp.), and tetrahydrofuran (THF) as developing solvent and computing relative to polystyrene standards.

A test solution was prepared by sampling an aliquot (~0.01 g) of a PEG derivative and adding -10 mL of THF to dissolve the PEG derivative. Each (100 μL) of the test solution and polystyrene standard (Tosoh Corp.) was injected into the GPC system. Measurement was made by feeding THF as mobile phase at a flow rate of 1.0 mL/min and a column temperature of 40°C. The results thus obtained were analyzed by 480II Data Station GPC program (System Instruments Co., Ltd.). A molecular weight was calculated by AUTO Fitting using the extrapolation curve method (primary). A molecular weight was estimated using a calibration curve drawn on the basis of elution times of polystyrene solutions of molecular weight standards and molecular weights.

(2) Water-soluble porous powder: specified in Table 2

<Accumulated value of concentration fraction (%) at molecular weight 10,000 in integral molecular weight distribution>

It is described how to determine an accumulated value of the concentration fraction (%) at molecular weight 10,000 in an integral molecular weight distribution of the water-soluble porous powder used herein.

A molecular weight distribution of a water-soluble porous powder can be determined by injecting a test solution into a high-performance liquid chromatograph with a size exclusion column (GPC system), measuring an elution time, and calculating relative to the calibration curve of standard solutions. From the data, an accumulated value of the concentration fraction (%) at molecular weight 10,000 in the integral molecular weight distribution can be determined. Specifically, using a GPC analyzer (Shodex GPC-101, Showa Denko K.K.), detector (differential refraction index meter RI-71S (Showa Denko K.K.), and columns (two connected TSK-gel $GMPW_{XL}$ (diameter 7.8 mm × 300 mm), Tosoh Corp.), measurement was carried out as follows.

A test solution was prepared by sampling ~0.01 g of water-soluble porous powder, adding it to -100 mL of 0.1 mol/L sodium nitrate solution, allowing the solution to stand overnight at RT, and filtering the solution through a membrane filter with a pore size of 0.45 μm. Each (100 μL) of the test solution and the standard pullulan solutions (Showa Denko K.K.) was injected into the GPC system. Measurement was made by feeding 0.1 mol/L sodium nitrate solution as mobile phase at a flow rate of 1.0 mL/min and a column temperature of 40°C. The results thus obtained were analyzed by 480II Data Station GPC program (System Instruments Co., Ltd.). This was followed by drawing a base line across the thus obtained

peak curves, assigning a peak, converting the elution time to a molecular weight on the basis of the calibration line, determining a peak area, and calculating a concentration fraction of each elution time. By accumulating the concentration fractions in sequence and plotting the molecular weights (logarithmic values) on the abscissa and the accumulated values of concentration fractions on the ordinate, an integral molecular weight distribution is completed. An accumulated value of the concentration fraction at molecular weight 10,000 was obtained from the integral molecular weight distribution. The molecular weight was estimated using the calibration curve drawn on the basis of elution times and molecular weights of the standard pullulan solutions.

<Bulk density>

The bulk density or bulk specific gravity was computed as follows. A fully dry measuring cylinder was statically filled with 10 g-equivalent of a water-soluble porous powder under test. The volume (ml) of the powder was read from the graduations on the cylinder. This operation was repeated 10 times. An average volume A (ml) was calculated from the measured volumes. The bulk density was computed by substituting A in the equation: bulk density (g/cm$^3$) = 10/A.

(3) Hydroxyalkyl alkyl cellulose (CE): specified in Table 3

(4) Calcium stearate (StCa): reagent by FUJIFII,M Wako Pure Chemical Corp.

(5) Defoamer 1 (DF-1): polyether-based defoamer I (silica impregnated with defoamer)

Table 1

| Characteristic structure | polyethylene glycol derivative | | | |
|---|---|---|---|---|
| Manufacturer | Nippon Emulsion Co., Ltd. | | | |
| Compound name | A1: polyethylene glycol monostearate (average addition mole number of ethylenoxy groups 10) | A1: polyethylene glycol monostearate (average addition mole number of ethylenoxy groups 20) | A1: polyethylene glycol monoisostearate (average addition mole number of ethylenoxy groups 6) | A2: PEG-10BG isostearate (average addition mole number of ethylenoxy groups 10) |
| Product name | 810 | 820 | PEIS-6 | BGIS110 |
| Designation | PEG-10 stearate | PEG-20 stearate | PEG-6 isostearate | PEG-10BG isostearate |
| Compound | See formula PEG-10 below | See formula PEG-20 below | See formula PEG-6 below | See formula PEG-10BG below |
| Carbon count of R (substituent) | 17 (heptadecyl group) | 17 (heptadecyl group) | 17 (isoheptadecyl group) | 17 (isoheptadecyl group) |
| Average addition mole number n of ethylenoxy groups | 10 | 20 | 6 | 10 |
| IOB value | 1.10 | 1.37 | 0.91 | 0.96 |
| Mw | 730 | 1,200 | 550 | 780 |
| Melting point (°C) | 41 | 40 | liquid at RT | liquid at RT |

(continued)

| Characteristic structure | polyethylene glycol derivative | | | |
|---|---|---|---|---|
| Manufacturer | Nippon Emulsion Co., Ltd. | | | |
| Compound name | A1: polyethylene glycol monostearate (average addition mole number of ethylenoxy groups 10) | A1: polyethylene glycol monostearate (average addition mole number of ethylenoxy groups 20) | A1: polyethylene glycol monoisostearate (average addition mole number of ethylenoxy groups 6) | A2: PEG-10BG isostearate (average addition mole number of ethylenoxy groups 10) |
| Solubility | emulsifiable/dispersible | soluble | emulsifiable/dispersible | emulsifiable/dispersible |
| State | waxy solid | waxy solid | liquid | liquid |

(PEG-10) $C_{17}H_{35}COO(C_2H_4O)_{10}H$

(PEG-20) $C_{17}H_{35}COO(C_2H_4O)_{20}H$

(PEG-6) iso-$C_{17}H_{35}COO(C_2H_4O)_6H$

(PEG-10BG) 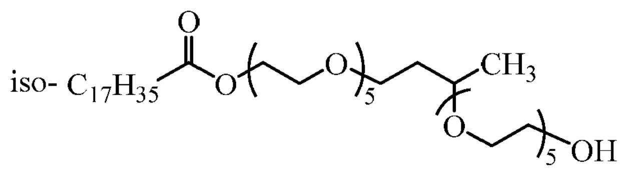

Table 2

| Characteristic structure | Water-soluble porous powder | |
|---|---|---|
| Manufacturer | Matsutani Chemical Industry Co., Ltd. | Nippon Starch Chemical Co., Ltd. |
| Compound type | porous dextrin | modified starch of porous structure |
| Trade name | Pineflow | Oil Q No. 50 |
| Bulk density, $g/cm^3$ | 0.17 | 0.18 |
| Average particle size (D50), µm | 27.3 | 38.4 |
| Volume proportion of particles of size 300 µm or more, % | 0.6 | 4.6 |
| DE | 11.1 | 140 |
| Accumulated value of concentration fraction at molecular weight 10,000 in integral molecular weight distribution, % | 74 | 84 |

Table 3

| Designation | Physical properties | Manufacturer |
|---|---|---|
| HPMC-1 | type: HPMC, 2 wt% aqueous solution viscosity: 98 mPa s, DS of methoxy group: 1.44, MS of hydroxypropoxy group: 0.17 | Shin-Etsu Chemical Co., Ltd. |
| HPMC-2 | type: HPMC, 2 wt% aqueous solution viscosity: 73,000 mPa s, DS of methoxy group: 1.45, MS of hydroxypropoxy group: 0.20 | |
| HPMC-3 | type: HPMC, 2 wt% aqueous solution viscosity: 32,100 mPa s, DS of methoxy group: 1.42, MS of hydroxypropoxy group: 0.20 | |
| HPMC-4 | type: HPMC, 2 wt% aqueous solution viscosity: 400 mPa s, DS of methoxy group: 1.73, MS of hydroxypropoxy group: 0.15 | |
| HEMC | type: HPMC, 2 wt% aqueous solution viscosity: 4800 mPa s, DS of methoxy group: 1.39, MS of hydroxyethoxy group: 0.21 | |

(Preparation of powdery additive (Example 1) and powdery thickener (Examples 2 to 15))

A powdery additive for hydraulic compositions was prepared by combining ingredients as shown in Table 4A. Specifically, a vertical granulator FM-VG-05 (Powrex Corp.) was used as a compact agitation granulator. A water-soluble porous powder was weighed in accordance with the blending proportion (wt%) shown in Table 4A such that the total weight of water-soluble porous powder and PEG derivative might be 200 g. The water-soluble porous powder was admitted into the jacket of the granulator. The temperature within the jacket was adjusted to the melting point of the PEG derivative ±2°C when the PEG derivative was solid at room temperature (20°C, the same holds true, hereinafter) and to 20±2°C when the PEG derivative was liquid at RT. Then a predetermined amount of the PEG derivative was weighed (such that the total weight of water-soluble porous powder and PEG derivative might be 200 g). Notably, when the PEG derivative was solid at RT, it was melted in a hot water bath before weighing. The PEG derivative was fed into the funnel of the granulator. With the granulator set to 450 rpm for the blade and 3,000 rpm for the chopper, agitation was started. The valve of the funnel was opened to admit the PEG derivative for 30 seconds. Agitation was continued for a further 2.5 minutes. At the end of agitation, the resulting powder was classified through a sieve with an opening of 300 μm, obtaining a powdery additive.

To the powdery additive, a water-soluble cellulose ether was added so as to provide the blending proportion (wt%) shown in Table 4A. The contents were mixed for 30 seconds on the vertical granulator with the same setting as the preparation of the powdery additive (450 rpm blade and 3,000 rpm chopper), obtaining a powdery thickener (Thickener Nos. 2 to 12 of Examples 2 to 12). It is noted that Example 11 (Thickener No. 11) was obtained by changing the PEG derivative in the powdery thickener (Thickener No. 2) of Example 2 to PEG-20 stearate; and Example 12 (Thickener No. 12) was obtained by changing the PEG derivative in the powdery thickener (Thickener No. 2) of Example 2 to PEG-10BG isostearate. Example 1 is a powdery additive (Additive No. 1) which was obtained by combining PEG-10 stearate with Pineflow without adding the water-soluble porous powder.

Also, to the powdery additive, a water-soluble cellulose ether and calcium stearate, or a water-soluble cellulose ether and Defoamer I were added in such amounts as to provide the predetermined blending proportion (wt%) shown in Table 4A. The contents were mixed for 30 seconds on the vertical granulator with the same setting as the preparation of the powdery additive (450 rpm blade and 3,000 rpm chopper), obtaining a powdery thickener (Thickener Nos. 13 to 15 of Examples 13 to 15).

All the powdery additive of Example 1 (Additive No. 1) and the powdery thickeners of Examples 2 to 15 (Thickener Nos. 2 to 15) were non-sticky and easy to handle.

Comparative Example 1 (Comparative Additive No. 1) consisted of Defoamer I. Comparative Example 2 (Comparative Thickener No. 1) was obtained by mixing hydroxypropyl methyl cellulose (HPMC-1) and Defoamer I on the vertical granulator with the same setting as the preparation of the powdery additive for 30 seconds.

II) Preparation of hydraulic composition (concrete composition)

A hydraulic composition (concrete composition) as shown in Table 4B was prepared using the following ingredients.

<Ingredients>

(1) Powdery additive or powdery thickener: Additive No. 1, Thickener Nos. 2 to 15, Comparative Additive No. 1, Comparative Thickener No. 1 (see Table 4A)

(2) Water (W): tap water

(3) Cement (C): normal Portland cement (density 3.16 g/cm$^3$, Taiheiyo Cement Corp.)

(4) AE water-reducing agent (WR): lignin sulfonic acid (Master Pozzolith No. 70 used as 4-fold dilution, BASF Pozzolith Ltd.)

(5) High-performance AE water-reducing agent (superplasticizer SP): polycarboxylate copolymer (Chupole HP-11, Takemoto Oil & Fat Co., Ltd.) (C × 0.85%)

(6) AE agent: resin acid salt type anionic surfactant (AE-300 used as 100-fold dilution, Takemoto Oil & Fat Co., Ltd., 1A = C × 0.001%)

(7) Fine aggregate (S): land sand (from Shinano River, surface dry density: 2.60 g/cm$^3$, water absorption percentage: 2.07%, coarse particle percentage: 2.79, solid volume percentage: 66.3%)

(8) Coarse aggregate (G): ground stone (20-5 mm, surface dry density: 2.69 g/cm$^3$, water absorption percentage: 1.35%, coarse particle percentage: 6.55, solid volume percentage: 58.5%)

A test was carried out with the concrete blending shown in Table 5, i.e., under conditions: a water/cement ratio 55.0% and a fine aggregate percentage 52.9%, water 175 kg/m$^3$, cement 318 kg/m$^3$, fine aggregate 931 kg/m$^3$, and coarse aggregate 861 kg/m$^3$ as unit content.

A hydraulic composition (concrete composition) was prepared according to the concrete formulation (addition components) shown in Table 4B. In Table 4B, the amount of PEG derivative, water-soluble porous powder, water-soluble cellulose ether, calcium stearate and defoamer added as the powdery additive or powdery thickener is grams per cubic meters (m$^3$) of the concrete composition, i.e., g/m$^3$; the amount of AE water-reducing agent and superplasticizer added is an amount (C × %) corresponding to wt% based on the cement (C); the amount of AE agent added is the described amount (unit A: amount of 1A corresponding to 0.001 wt% of the cement (C)).

Notably, the amount of AE agent added was adjusted so as to give an air content of 4.5±0.5%.

In Example 11, the amount of AE water-reducing agent added in the formulation of Example 1 was changed so as to adjust to a slump of 13.0±1.0 cm. In Example 12, the superplasticizer was further added as liquid material in the formulation of Example 1 to change the amount of AE water-reducing agent so as to adjust to a slump of 20.0±1.0 cm.

The concrete composition was prepared on a 60-L forced two-impeller mixer (WHQ-60A, Kitagawa Corp.). First, powder materials were admitted. That is, cement, fine aggregate, coarse aggregate, and powdery additive or powdery thickener shown in Table 4A (additive No. 1, thickener Nos. 2 to 15, comparative additive No. 1, comparative thickener No. 1) as powder materials were admitted, followed by dry mixing for 10 seconds. Thereafter, liquid materials were admitted. That is, AE water-reducing agent, AE agent, and water were added as the liquid materials. Subsequent mixing for 90 seconds yielded a concrete composition. The amount per batch of the concrete composition being mixed was 50 liters. The amount of water added at this stage was the necessary weight of water minus the total weight of the liquid materials other than water.

Table 4A

| | | Additive No. | Thickener No. | Powdery Thickener: Powdery additive: (A) PEG derivative designation | (A) wt% | (B) Water-soluble porous powder type | (B) wt% | (C) Water-soluble cellulose ether designation | (C) wt% | (D) Water repellent type | (D) wt% | Defoamer I wt% | Total wt% | Physical properties of powdery additive: Average particle size µm | Volume proportion of particles sized 300 µm or more (%) |
|---|---|---|---|---|---|---|---|---|---|---|---|---|---|---|---|
| Example | 1 | 1 | - | PEG-10 stearate | 33.3 | Pineflow | 66.7 | - | - | - | - | - | 100.0 | 114 | 0.3 |
| | 2 | - | 2 | PEG-10 stearate | 14.8 | Pineflow | 29.6 | HPMC-1 | 55.6 | - | - | - | 100.0 | 112 | 0.5 |
| | 3 | - | 3 | PEG-10 stearate | 9.5 | Pineflow | 19.0 | HPMC-1 | 71.4 | - | - | - | 100.0 | 102 | 0.1 |
| | 4 | - | 4 | PEG-10 stearate | 18.2 | Pineflow | 36.4 | HPMC-1 | 45.5 | - | - | - | 100.0 | 116 | 0.8 |
| | 5 | - | 5 | PEG-10 stearate | 14.8 | Oil Q No. 50 | 29.6 | HPMC-1 | 55.6 | - | - | - | 100.0 | 125 | 1.5 |
| | 6 | - | 6 | PEG-10 stearate | 25.3 | Pineflow | 50.6 | HPMC-2 | 24.1 | - | - | - | 100.0 | 110 | 0.3 |
| | 7 | - | 7 | PEG-10 stearate | 23.9 | Pineflow | 47.8 | HPMC-3 | 28.4 | - | - | - | 100.0 | 108 | 0.2 |
| | 8 | - | 8 | PEG-10 stearate | 17.7 | Pineflow | 35.3 | HPMC-4 | 47.0 | - | - | - | 100.0 | 116 | 0.3 |
| | 9 | - | 9 | PEG-10 stearate | 21.4 | Pineflow | 42.8 | HEMC | 35.8 | - | - | - | 100.0 | 114 | 0.2 |
| | 10 | - | 10 | PEG-6 isostearate | 14.8 | Pineflow | 29.6 | HPMC-1 | 55.6 | - | - | - | 100.0 | 118 | 0.6 |
| | 11 | - | 11 | PEG-20 stearate | 14.8 | Pineflow | 29.6 | HPMC-1 | 55.6 | - | - | - | 100.0 | 110 | 0.1 |
| | 12 | - | 12 | PEG-10BG isostearate | 14.8 | Pineflow | 29.6 | HPMC-1 | 55.6 | - | - | - | 100.0 | 120 | 1.0 |
| | 13 | - | 13 | PEG-10 stearate | 13.8 | Pineflow | 27.6 | HPMC-1 | 51.7 | StCa | 6.9 | - | 100.0 | 112 | 0.5 |
| | 14 | - | 14 | PEG-10 stearate | 14.0 | Pineflow | 28.1 | HPMC-1 | 52.6 | - | - | 5.3 | 100.0 | 112 | 0.4 |
| | 15 | - | 15 | PEG-6 isostearate | 14.0 | Pineflow | 28.1 | HPMC-1 | 52.6 | - | - | 5.3 | 100.0 | 118 | 0.8 |
| Comp. Ex. | 1 | Comp. 1 | - | - | - | - | - | - | - | - | - | 100.0 | 100.0 | - | - |
| | 2 | - | Comp. 1 | - | - | - | - | HPMC-1 | 90.9 | - | - | 9.1 | 100.0 | - | - |

Table 4B

| | | Additive No. | Thickener No. | Formulation to concrete (components added) | | | | | | | |
|---|---|---|---|---|---|---|---|---|---|---|---|
| | | | | Powdery additive/Powdery thickener | | | | | Other admixtures | | |
| | | | | Component (A) | Component (B) | Component (C) | Component (D) | Defoamer I | AE water-reducing agent | Super-plasticizer | AE agent |
| | | | | Addition amount (g/m$^3$) | | | | | (C×%) | | (A) |
| Example | 1 | 1 | - | 80 | 160 | - | - | - | 0.25 | - | 6.0 |
| | 2 | - | 2 | 80 | 160 | 300 | - | - | 0.25 | - | 5.0 |
| | 3 | - | 3 | 40 | 80 | 300 | - | - | 0.25 | - | 5.0 |
| | 4 | - | 4 | 120 | 240 | 300 | - | - | 0.25 | - | 5.0 |
| | 5 | - | 5 | 80 | 160 | 300 | - | - | 0.25 | - | 7.0 |
| | 6 | - | 6 | 80 | 160 | 76 | - | - | 0.25 | - | 4.0 |
| | 7 | - | 7 | 80 | 160 | 95 | - | - | 0.25 | - | 4.2 |
| | 8 | - | 8 | 80 | 160 | 213 | - | - | 0.25 | - | 4.5 |
| | 9 | - | 9 | 80 | 160 | 134 | - | - | 0.25 | - | 5.5 |
| | 10 | - | 10 | 80 | 160 | 300 | - | - | 0.25 | - | 3.0 |
| | 11 | - | 11 | 80 | 160 | 300 | - | - | 0.40 | - | 5.0 |
| | 12 | - | 12 | 80 | 160 | 300 | - | - | 0.40 | 0.85 | 5.0 |
| | 13 | - | 13 | 80 | 160 | 300 | 40 | - | 0.25 | - | 5.0 |
| | 14 | - | 14 | 80 | 160 | 300 | - | 30 | 0.25 | - | 8.0 |
| | 15 | - | 15 | 80 | 160 | 300 | - | 30 | 0.25 | - | 9.0 |
| Comp. Ex. | 1 | Comp. 1 | - | - | - | - | - | 30 | 0.25 | - | 4.5 |
| | 2 | - | Comp. 1 | - | - | 300 | - | 30 | 0.25 | - | 3.5 |

Table 5

| Formulation No. | Concrete formulation | | | | | |
|---|---|---|---|---|---|---|
| | water/cement ratio (W/C), wt% | fine aggregate proportion* (s/a), vol% | unit amount (kg/m$^3$) | | | |
| | | | water (W) | cement (C) | fine aggregate (S) | coarse aggregate (G) |
| 1 | 55.0 | 529 | 175 | 318 | 931 | 861 |
| *fine aggregate proportion (vol%) = (volume of fine aggregate)/[(volume of fine aggregate)+(volume of coarse aggregate)] × 100 | | | | | | |

The resulting concrete compositions were tested under the following conditions.

<Fresh physical properties>

(Concrete temperature)

The temperatures of ingredients were adjusted such that the concrete composition reached a temperature of 20 ±3°C at the end of mixing.

The temperature of the concrete composition was measured by inserting the sensor of a digital thermometer (model SN3200II by Netsuken Co., Ltd.) into the concrete composition. All the concrete compositions showed a temperature within the range of 20±3°C.

(Slump)

Tested according to JIS A 1101.

(Air content test)

The concrete composition immediately after preparation (just as mixed) was measured for air content (vol%) according to JIS A 1128.

(Bleeding percentage)

The concrete composition immediately after preparation (just as mixed) was measured for bleeding percentage according to JIS A 1123.

(Air void analyzer (AVA) test or air void spacing factor)

Using an air void analyzer (AVA® by Germann Instruments), an air void spacing factor was measured as an index of frost damage resistance. A solution for the AVA test was prepared by previously mixing glycerin (FUJIFILM Wako Pure Chemical Corp.) and water in a weight ratio (glycerin/water) of 83/17.

The concrete composition as mixed was passed through a sieve with an opening of 5 mm to collect a mortar composition for air void spacing factor evaluation. A 20-ml sample was taken into a special syringe, about 2,000 ml of water was injected into a measuring column, bubbles attached to the column wall were removed with a brush, and 250 ml of the AVA measuring solution was injected into the column at its bottom through a special tool. After injection, a bubble collecting petri dish was placed near the water surface of the column and secured to a measurement site. The 20-ml sample of mortar composition in the syringe was injected to the column bottom, after which the mortar composition was agitated for 30 seconds, allowing the air entrained in the mortar composition to fully release into the liquid. The amount of released air bubbles was measured with the lapse of time, from which an air void spacing factor was determined.

In calculating an air void spacing factor, the total volume of the mortar composition minus the volume of aggregates with a size of 5 mm or larger (i.e., volume percentage of mortar) and the paste volume (i.e., volume percentage of paste) were necessary as well as the air content of the fresh concrete. The volume percentages of mortar and paste were computed from the following equations (I) and (II).

$$\text{Volume percentage of mortar (\%)} = (V_B+V_W+V_S)/1000] \times 100 \qquad \text{(I)}$$

$$\text{Volume percentage of paste (\%)} = [(V_B+V_W)/1000] \times 100 \qquad (II)$$

$V_B$: Volume of cement (= unit weight (kg) of cement/specific gravity of cement)
Vw: Volume of liquid additives including water, AE agent and water-reducing agent, which is equal to the unit content of water
Vs: Volume of aggregates with a size of 5 mm or smaller (= unit content of fine aggregate/specific gravity of fine aggregate)

(Bubble proportion of each bubble size section)

When the air void analyzer is turned on according to the above procedure, automatic measurement starts. Coarse large bubbles rise more quickly in the column and collect below the petri dish whereas fine small bubbles rise more slowly in the column. As the weight of the petri dish is measured with the lapse of time, the proportion of bubbles for each bubble size section is automatically computed.

(Air content (vol%))

The total of bubble proportions of bubble size sections is the air content (vol%).

<Cured physical properties>

(Compressive strength)

A compressive strength test was carried out on a 28-day aged concrete according to JIS A 1108. A specimen was sized 10 cm (diameter) by 20 cm. The average value of three specimens was evaluated as the compressive strength for each level.

(Freezing and thawing test)

The freezing and thawing test was carried out according to Method A of JIS A 1148-2010. A relative dynamic modulus of elasticity was measured until 300 cycles at the maximum. A specimen was sized 100 mm × 100 mm × 400 mm long. The average value of three specimens was evaluated as the relative dynamic modulus of elasticity for each level. When the relative dynamic modulus of elasticity decreased below 60% before reaching 300 cycles, the test was ended at that cycle.
Using the relative dynamic modulus of elasticity, an index of durability was computed according to the formula below, and rounded to an integer. A sample was judged to have frost damage resistance when the index of durability was 60 or higher.

$$\text{Index of durability} = P \times N/M$$

P: relative dynamic modulus of elasticity (%) at N cycles
N: smaller one of the number of cycles reaching a relative dynamic modulus of elasticity of 60% and 300 cycles
M: 300 cycles

The results of the above tests are shown in Tables 6A and 6B.

Table 6A

| | | Additive No. | Thickener No. | Fresh physical properties | | | | | Cured physical properties | |
|---|---|---|---|---|---|---|---|---|---|---|
| | | | | Concrete temp., (°C) | Slump, (cm) | Air meter | Bleeding percentage (%) | AVA | Compressive strength | Freezing and thawing test |
| | | | | | | Air content (%) | | | age 28 days | |
| | | | | | | Immediately after preparation | | | cure in water at 20°C | Index of durability |
| Example | 1 | 1 | - | 20.0 | 8.0 | 4.5 | 2.10 | See Table 6B | 36.5 | 90 |
| | 2 | - | 2 | 19.8 | 10.0 | 4.6 | 1.38 | | 36.3 | 92 |
| | 3 | - | 3 | 19.5 | 9.5 | 4.5 | 1.52 | | 36.8 | 89 |
| | 4 | - | 4 | 19.8 | 11.0 | 4.6 | 1.28 | | 35.9 | 95 |
| | 5 | - | 5 | 19.6 | 9.5 | 4.4 | 1.42 | | 36.6 | 90 |
| | 6 | - | 6 | 20.1 | 9.0 | 4.5 | 1.28 | | 35.4 | 90 |
| | 7 | - | 7 | 19.9 | 9.0 | 4.7 | 1.45 | | 36.9 | 92 |
| | 8 | - | 8 | 19.8 | 10.0 | 4.4 | 1.35 | | 34.9 | 89 |
| | 9 | - | 9 | 20.7 | 9.5 | 4.6 | 1.52 | | 36.4 | 88 |
| | 10 | - | 10 | 19.5 | 10.0 | 4.5 | 1.52 | | 36.3 | 90 |
| | 11 | - | 11 | 20.1 | 13.0 | 4.7 | 1.42 | | 36.9 | 91 |
| | 12 | - | 12 | 19.9 | 19.0 | 4.5 | 1.52 | | 37.0 | 83 |
| | 13 | - | 13 | 19.9 | 10.5 | 4.5 | 1.35 | | 36.9 | 98 |
| | 14 | - | 14 | 20.8 | 12.5 | 4.5 | 1.12 | | 35.8 | 88 |
| | 15 | - | 15 | 20.3 | 12.0 | 4.5 | 1.17 | | 36.0 | 82 |
| Comp. Ex. | 1 | Comp. 1 | - | 19.7 | 7.0 | 4.4 | 2.40 | | 35.0 | 12 |
| | 2 | - | Comp. 1 | 20.8 | 8.0 | 4.6 | 2.19 | | 35.1 | 6 |

Table 6B

| | | Additive No. | Thickener No. | Fresh physical properties | | | | | | | | | |
|---|---|---|---|---|---|---|---|---|---|---|---|---|---|
| | | | | AVA | | | | | | | | | |
| | | | | void spacing factor (μm) | Air content (%) | Bubble proportion of each bubble size section (%) | | | | | | | |
| | | | | | | 75-100 (μm) | 100-125 (μm) | 125-150 (μm) | 150-200 (μm) | 200-300 (μm) | 300-500 (μm) | 500-1000 (μm) | 1000-2000 (μm) |
| Example | 1 | 1 | - | 160 | 13.1 | 1.3 | 1.3 | 2.3 | 3.3 | 2.5 | 1.9 | 0.2 | 0.3 |
| | 2 | - | 2 | 152 | 13.1 | 1.4 | 1.3 | 2.6 | 3.2 | 2.4 | 1.8 | 0.1 | 0.3 |
| | 3 | - | 3 | 165 | 13.4 | 1.3 | 1.0 | 2.5 | 3.3 | 2.5 | 1.9 | 0.3 | 0.6 |
| | 4 | - | 4 | 147 | 13.0 | 1.5 | 1.3 | 2.6 | 3.2 | 2.4 | 1.8 | 0.1 | 0.1 |
| | 5 | - | 5 | 164 | 13.3 | 1.3 | 1.4 | 2.5 | 3.1 | 2.5 | 1.8 | 0.3 | 0.4 |
| | 6 | - | 6 | 157 | 13.0 | 1.4 | 1.3 | 2.4 | 3.0 | 2.6 | 1.8 | 0.2 | 0.3 |
| | 7 | - | 7 | 155 | 13.0 | 1.5 | 1.3 | 2.3 | 3.1 | 2.5 | 1.9 | 0.2 | 0.2 |
| | 8 | - | 8 | 162 | 13.1 | 1.4 | 1.1 | 2.3 | 3.0 | 2.7 | 2.1 | 0.2 | 0.3 |
| | 9 | - | 9 | 170 | 13.2 | 1.1 | 1.0 | 2.5 | 3.2 | 2.5 | 2.0 | 0.4 | 0.5 |
| | 10 | - | 10 | 167 | 13.2 | 1.1 | 1.5 | 2.3 | 3.0 | 2.6 | 1.8 | 0.4 | 0.5 |
| | 11 | - | 11 | 158 | 12.8 | 1.3 | 1.3 | 2.4 | 2.9 | 2.6 | 1.8 | 0.2 | 0.3 |
| | 12 | - | 12 | 177 | 12.4 | 1.1 | 1.0 | 2.5 | 2.9 | 2.3 | 1.8 | 0.4 | 0.4 |
| | 13 | - | 13 | 150 | 13.1 | 1.5 | 1.3 | 2.6 | 3.2 | 2.4 | 1.8 | 0.1 | 0.2 |
| | 14 | - | 14 | 172 | 12.8 | 1.2 | 1.1 | 2.5 | 3.0 | 2.5 | 1.9 | 0.2 | 0.4 |
| | 15 | - | 15 | 183 | 12.6 | 1.0 | 0.9 | 2.5 | 2.9 | 2.1 | 1.9 | 0.6 | 0.7 |
| Comp. Ex. | 1 | Comp. 1 | - | 408 | 11.5 | 0.0 | 0.4 | 0.3 | 0.6 | 0.6 | 2.6 | 5.6 | 1.4 |
| | 2 | - | Comp. 1 | 412 | 11.2 | 0.0 | 0.3 | 0.4 | 0.6 | 0.5 | 2.4 | 5.4 | 1.6 |

The following is concluded from the above results. Examples 1 to 9 demonstrate that even when the water-soluble cellulose ether changes its viscosity, DS, and/or chemical structure, a hydraulic composition is advantageously improved in the three factors: fluidity, bleeding and frost damage resistance by adding the powdery additive in the form of water-soluble porous powder impregnated with PEG derivative.

Examples 10 to 12, 14 and 15 demonstrate that when the PEG derivative changes its structure or the defoamer is added, a hydraulic composition (specifically concrete composition) is advantageously improved in the three factors: fluidity, bleeding and frost damage resistance.

Example 13 demonstrates that when calcium stearate is added, a hydraulic composition (concrete composition) is further improved in frost damage resistance while maintaining fluidity and bleeding.

In Examples, the additives or thickeners can be used in powder form and are very easy to handle.

Comparative Example 1 using Defoamer I (DF-1): polyether-based defoamer in the form of silica impregnated with defoamer alone and Comparative Example 2 using Defoamer I in combination with water-soluble cellulose ether (HPMC-1) can be used in powder form and are easy to handle, but no improvements in the three factors: fluidity, bleeding and frost damage resistance were observed.

It is noted that the invention is not limited to the aforementioned embodiments. While the embodiments are merely exemplary, any embodiments having substantially the same construction as the technical concept set forth in the following claims and exerting equivalent functions and results are believed to be within the spirit and scope of the invention.

## Claims

1. A powdery additive for hydraulic compositions comprising a water-soluble porous powder impregnated with a polyethylene glycol derivative having an IOB value in the organic conception diagram of 0.3 to 1.8 and a weight average molecular weight Mw of 300 to 2,500 as measured by gel permeation chromatography versus polystyrene standards, and containing at least one $RCOO(C_2H_4O)_n$- wherein R is a $C_{10}$-$C_{24}$ straight or branched monovalent hydrocarbon group and n is an integer of 3 to 40 in the molecule and a polyethylene glycol end OH or -OH group as a functional group.

2. The additive of claim 1 wherein the polyethylene glycol derivative is at least one of compounds having the general formulae (A1) and (A2):

$$RCOO\text{-}(C_2H_4O)_n\text{-}H \qquad (A1)$$

$$(RCOO\text{-}(C_2H_4O)_{n1})_tR^1((OC_2H_4)_{n2}\text{-}OH)_u \qquad (A2)$$

wherein Rand n are as defined above, $R^1$ is a residue obtained from a polyhydric alcohol having 2 to 5 hydroxy groups by eliminating the hydroxy groups, the residue being a di- to penta-valent $C_2$-$C_5$ straight or branched hydrocarbon group, t and u each are an integer of 1 to 4, the sum of t and u is an integer of 2 to 5, n1 and n2 each are an integer of at least 0, and $n1\times t+n2\times u$ is an integer of 3 to 30.

3. The additive of claim 1 or 2 wherein the water-soluble porous powder is a water-soluble porous polysaccharide.

4. The additive of any one of claims 1 to 3 wherein the water-soluble porous powder has a bulk density of 0.10 to 0.25 $g/cm^3$.

5. The additive of any one of claims 1 to 4 wherein in an integral molecular weight distribution of the water-soluble porous powder as measured by gel permeation chromatography, an accumulated value of the concentration fraction at a molecular weight of 10,000 is 30 to 90%.

6. The additive of any one of claims 1 to 5 wherein the water-soluble porous powder has a dextrose equivalent (DE) of 2 to 18.

7. The additive of any one of claims 1 to 6 wherein in a particle size distribution of the water-soluble porous powder as measured by the dry laser method, the water-soluble porous powder has an average particle size of 10 to 230 μm and the volume proportion of particles having a particle size of at least 300 μm is 0 to 10%.

8. The additive of any one of claims 1 to 7 wherein in a particle size distribution of the additive as measured by the dry laser method, the additive has an average particle size of 40 to 280 μm and the volume proportion of particles having a particle size of at least 300 μm is 0 to 10%.

9. A powdery thickener for hydraulic compositions comprising the powdery additive of any one of claims 1 to 8 and a water-soluble cellulose ether.

10. The thickener of claim 9 wherein the water-soluble cellulose ether is a hydroxyalkyl alkyl cellulose.

11. The thickener of claim 9 or 10 wherein the water-soluble cellulose ether has a 2 wt% aqueous solution viscosity of 15 to 450,000 mPa·s at 20°C.

12. The thickener of any one of claims 9 to 11, further comprising a water repellent.

13. A hydraulic composition comprising the powdery additive of any one of claims 1 to 8, a hydraulic substance, and water.

14. The hydraulic composition of claim 13, further comprising a water-soluble cellulose ether.

15. The hydraulic composition of claim 13 or 14, further comprising a water repellent.

16. The hydraulic composition of any one of claims 13 to 15, which is a concrete composition further comprising a fine aggregate, a coarse aggregate, and a water-reducing agent,
the concrete composition having a slump of 8 to 21 cm as measured by the method of JIS A 1101 and a compressive strength of 18 to 45 $N/mm^2$ as measured by the method of JIS A 1108 at an age of 28 days.

17. A hydraulic composition comprising the powdery thickener of any one of claims 9 to 12, a hydraulic substance, and water.

18. The hydraulic composition of claim 17, which is a concrete composition further comprising a fine aggregate, a coarse aggregate, and a water-reducing agent,
the concrete composition having a slump of 8 to 21 cm as measured by the method of JIS A 1101 and a compressive strength of 18 to 45 $N/mm^2$ as measured by the method of JIS A 1108 at an age of 28 days.

19. A method of preparing a hydraulic composition containing a hydraulic substance, water, and a polyethylene glycol derivative,
the method comprising the step of adding the powdery additive of any one of claims 1 to 8 in the step of mixing the components of the hydraulic composition.

20. A method of preparing a hydraulic composition containing a hydraulic substance, water, a water-soluble cellulose ether, and a polyethylene glycol derivative,
the method comprising the step of adding the powdery thickener of any one of claims 9 to 12 in the step of mixing the components of the hydraulic composition.

21. The method of claim 19 or 20 wherein the hydraulic composition further contains a fine aggregate, a coarse aggregate, and a water-reducing agent to constitute a concrete composition,
the concrete composition having a slump of 8 to 21 cm as measured by the method of JIS A 1101 and a compressive strength of 18 to 45 $N/mm^2$ as measured by the method of JIS A 1108 at an age of 28 days.

Europäisches Patentamt
European Patent Office
Office européen des brevets

# EUROPEAN SEARCH REPORT

Application Number
EP 24 17 8917

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 157 998 A (BERNTSSON LEIF [SE] ET AL) 12 June 1979 (1979-06-12)<br>* the whole document * | 1,2,7,8,13,16,19 | INV.<br>C04B20/10<br>C04B28/02<br>C04B40/00<br><br>ADD.<br>C04B103/44 |
| A | WO 00/47533 A1 (SKW BAUCHEMIE GMBH [DE]; ALBRECHT GERHARD [DE] ET AL.) 17 August 2000 (2000-08-17)<br>* the whole document * | 1-21 | |
| A | WO 2012/101187 A1 (WACKER CHEMIE AG [DE]; ZEH HARALD [DE] ET AL.) 2 August 2012 (2012-08-02)<br>* the whole document * | 1-21 | |

TECHNICAL FIELDS SEARCHED (IPC)

C04B

The present search report has been drawn up for all claims

| Place of search | Date of completion of the search | Examiner |
|---|---|---|
| Munich | 12 November 2024 | Gattinger, Irene |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 17 8917

This annex lists the patent family members relating to the patent documents cited in the above-mentioned European search report. The members are as contained in the European Patent Office EDP file on
The European Patent Office is in no way liable for these particulars which are merely given for the purpose of information.

12-11-2024

| Patent document cited in search report | | Publication date | Patent family member(s) | | | Publication date |
|---|---|---|---|---|---|---|
| US 4157998 | A | 12-06-1979 | BR | 7708562 | A | 22-08-1978 |
| | | | DE | 2756798 | A1 | 06-07-1978 |
| | | | GB | 1593436 | A | 15-07-1981 |
| | | | JP | S5384025 | A | 25-07-1978 |
| | | | JP | S6119581 | B2 | 17-05-1986 |
| | | | SE | 418736 | B | 22-06-1981 |
| | | | US | 4157998 | A | 12-06-1979 |
| WO 0047533 | A1 | 17-08-2000 | AT | E221863 | T1 | 15-08-2002 |
| | | | AU | 3279000 | A | 29-08-2000 |
| | | | CA | 2362378 | A1 | 17-08-2000 |
| | | | DE | 19905488 | A1 | 17-08-2000 |
| | | | DK | 1154967 | T3 | 02-12-2002 |
| | | | EP | 1154967 | A1 | 21-11-2001 |
| | | | ES | 2177511 | T3 | 16-12-2002 |
| | | | JP | 4921640 | B2 | 25-04-2012 |
| | | | JP | 2002536289 | A | 29-10-2002 |
| | | | PT | 1154967 | E | 31-12-2002 |
| | | | US | 6620879 | B1 | 16-09-2003 |
| | | | WO | 0047533 | A1 | 17-08-2000 |
| WO 2012101187 | A1 | 02-08-2012 | BR | 112013019248 | A2 | 11-10-2016 |
| | | | CN | 103339081 | A | 02-10-2013 |
| | | | DE | 102011003268 | A1 | 02-08-2012 |
| | | | EP | 2655280 | A1 | 30-10-2013 |
| | | | KR | 20130128453 | A | 26-11-2013 |
| | | | US | 2013310488 | A1 | 21-11-2013 |
| | | | WO | 2012101187 | A1 | 02-08-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008037663 A
- JP 2011184236 A
- JP 2017065995 A
- JP H05085791 A


### Non-patent literature cited in the description


- **T. HASEGAWA** ; **T. FUJIWARA**. Concrete structure durability series: frost damage. Gihoudo Publishing, February 1988, 63